# EUROPEAN PATENT APPLICATION

(11) **EP 4 253 206 A1**
(43) Date of publication of application: **04.10.2023**
(21) Application number: 20963639.8
(22) Date of filing: 17.12.2020
(51) Int. Cl.: B62H 3/00, B62H 5/00, B62J 43/16

(54) **SHARING SYSTEM**

(30) Priority: 24.11.2020 JP 2020194604
(71) Applicant: HONDA MOTOR CO., LTD., Minato-ku Tokyo 107-8556 (JP)
(72) Inventor: OZAKI Yusuke, Tokyo 107-8556 (JP); TOMOTANI Hiroyuki, Tokyo 107-8556 (JP); HABAGUCHI Masayuki, Tokyo 107-8556 (JP)
(74) Representative: Weickmann & Weickmann PartmbB
(86) International application number: PCT/JP2020/047131
(87) International publication number: WO 2022/113376

(57) **Abstract**

Provided is a sharing system (12) for a plurality of users to share an electric moving body (10). The electric moving body (10) comprises a second holder (112) which detachably holds a user battery (102) owned by a user who has rented the electric moving body (10). The sharing system (12) comprises an authentication unit (150) which acquires a battery ID from the user battery (102) mounted to the second holder (112) and determines whether or not the acquired battery ID and a registered ID registered in advance match each other to thereby authenticate the user who uses the electric moving body (10).

## Description

### TECHNICAL FIELD

The present invention relates to a sharing system in which a plurality of users share an electric moving body.

### BACKGROUND ART

An electric moving body such as an electric bicycle or the like drives a drive source by supplying electrical power from a battery to the drive source, and transmits the driving force of the drive source to the vehicle wheels, to thereby assist in traveling or carry out self-traveling of the electric moving body. In an electric moving body of this type, there are also cases in which the electric moving body is equipped with a plurality of batteries in order to reduce the chance of the battery running out of electrical power during traveling.

For example, in JP 2004-359032 A, an electric moving body is disclosed in which two batteries (battery packs) are provided in the vehicle body, and selective switching between supplying electrical power from one of the batteries and supplying electrical power from the other of the batteries is carried out on the basis of a residual battery level. Further, the electric moving body disclosed in JP 2015-231764 A is configured in a manner so that, when an operating unit is operated by the user in a stopped state, a control unit is operated by electrical power of the battery within the operating unit, and after being operated in this manner, the electrical power is supplied from the battery unit to an electric component (a motor).

### SUMMARY OF THE INVENTION

Incidentally, in a sharing system in which a plurality of users share an electric moving body as described above, in order to prevent unauthorized usage of the electric moving body, user authentication is performed when a user who has applied for usage of the electric moving body rents the electric moving body. For example, in conventional user authentication, a passcode is transmitted to a user at the time of application for usage, and the user inputs the passcode to a management device or the like of a station, for the management device to determine whether or not the user is a legitimate user.

The user authentication as described above requires a complicated workload on the user at the time of renting the electric moving body. In particular, a user who is not familiar with the use of the sharing system may take time or make an input error due to a lack of knowledge about the operation procedure, and may feel inconvenience in using the sharing system.

The present invention has been devised in view of the aforementioned problems, and has the object of providing a sharing system in which each of the users can use the electric moving body comfortably, by significantly reducing workload on the user in the user authentication.

In order to achieve the aforementioned object, an aspect of the present invention is characterized by a sharing system in which a plurality of users share an electric moving body, the electric moving body including a holder configured to detachably retain a user battery possessed by one of the users who has rented the electric moving body, and the sharing system includes an authentication unit configured to authenticate the one of the users that uses the electric moving body, by acquiring battery identification information from the user battery installed in the holder, and determining whether the acquired battery identification information coincides with registration identification information that is registered beforehand.

In the above-described sharing system, by significantly reducing the workload on the user in the user authentication, it is possible for the user to use the electric moving body comfortably.

### BRIEF DESCRIPTION OF DRAWINGS

FIG. 1 is an explanatory diagram schematically showing an overall configuration of a sharing system for an electric moving body according to an embodiment of the present invention;
FIG. 2 is a side view of an electric bicycle, which is an electric moving body;
FIG. 3A is a block diagram showing the flow of a driving force of the electric bicycle;
FIG. 3B is a block diagram showing an electrical power wiring between a drive source and both of a main body battery and a user battery;
FIG. 4 is a perspective view showing a second holder in which the user battery is retained;
FIG. 5 is a flowchart showing a manner in which the sharing system is used;
FIG. 6 is a block diagram showing a configuration of the sharing system;
FIG. 7A is a flowchart showing a processing sequence between an information processing terminal and a management server at a time of user registration;
FIG. 7B is an explanatory diagram showing an example of a registrant database;
FIG. 8 is a flowchart showing a processing sequence between the information processing terminal and the management server in an application for usage;
FIG. 9 is an explanatory diagram showing an example of screen information of the application for usage;
FIG. 10 is an explanatory diagram showing an example of screen information for inputting user battery information;
FIG. 11A is an explanatory diagram showing an example of application acceptance information in which user information and application information are associated with each other;
FIG. 11B is an explanatory diagram showing an example of a moving body database;
FIG. 12A is a first explanatory diagram showing an example of matching between an electric moving body and the user battery;
FIG. 12B is a second explanatory diagram showing an example of matching between the electric moving body and the user battery;
FIG. 12C is a third explanatory diagram showing an example of matching between the electric moving body and the user battery;
FIG. 13 is an explanatory diagram showing an example of map screen information of an electric moving body provided by the management server in accordance with such matching;
FIG. 14A is an explanatory diagram showing an example of a movement capable range of the electric moving body;
FIG. 14B is an explanatory diagram showing an example of shared battery information displayed when a battery station is selected;
FIG. 15 is an explanatory diagram showing an example of a shared battery database;
FIG. 16 is a block diagram showing an example of a process for assigning battery identification information to the user battery;
FIG. 17 is a block diagram showing a configuration in order to perform user authentication when a user rents an electric moving body;
FIG. 18 is a flowchart showing a processing sequence of the user battery, the electric moving body, and the management server in the user authentication;
FIG. 19 is a block diagram showing an internal configuration of an ECU when a user has used an electric moving body;
FIG. 20A is a block diagram showing an electrical power supply control in the case that the user battery is not connected;
FIG. 20B, FIG. 20C, and FIG. 20D are block diagrams showing the electrical power supply control in the case that the user battery is connected;
FIG. 21 is a graph showing an example of output values of the user battery and operations of the main body battery with respect to a required electrical power;
FIG. 22 is a graph showing an example of changes in the residual battery level of the main body battery in the case of the user battery not being connected and in the case of the user battery being connected;
FIG. 23 is a flowchart showing an example of an ECU control flow at a time when the electric moving body is being used;
FIG. 24 is an explanatory diagram showing communication of information with the management server when a user has used an electric moving body;
FIG. 25A is an explanatory diagram showing an example of a state in which the movement capable range is displayed on map information of a touch panel;
FIG. 25B is an explanatory diagram showing an example of a low residual level notification of the touch panel;
FIG. 26 is an explanatory diagram showing an example of calculating a plurality of movement routes to a destination;
FIG. 27 is an explanatory diagram showing an example of detecting a usage period of the electric moving body and calculation of a usage fee;
FIG. 28A is an explanatory diagram showing an example of calculating the usage fee based on an amount of battery usage of the main body battery;
FIG. 28B is an explanatory diagram showing an example of calculating another usage fee in which the amount of battery usage of the main body battery is used;
FIG. 29 is an explanatory diagram showing an example of calculating a usage fee in which the amount of battery usage of the user battery is used;
FIG. 30 is a perspective view showing a state in which the user battery is retained according to a first exemplary modification;
FIG. 31A is a block diagram showing the supply of electrical power from the main body battery to the user battery according to a second exemplary modification; and
FIG. 31B is a block diagram showing the supply of electrical power from the user battery to the main body battery according to a third exemplary modification.

### DESCRIPTION OF THE INVENTION

Hereinafter, preferred embodiments concerning the present invention will be presented and described in detail below with reference to the accompanying drawings.

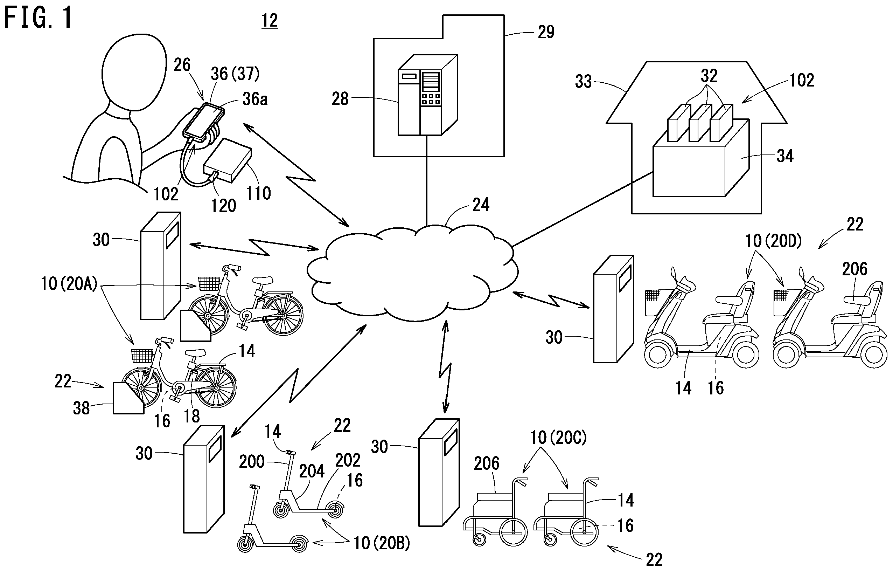

As shown in FIG. 1, an electric moving body 10 according to one embodiment of the present invention is applied to a sharing system 12, and is rented by a plurality of users (users), or is shared among a plurality of users from a business operator that provides such a system. In the sharing system 12, a plurality of the electric moving bodies 10 are arranged with respect to one or more stations 22 provided in the city by the business operator. A user who is registered in the sharing system 12 applies for usage of an electric moving body 10, and after having made such an application, uses the electric moving body 10 by proceeding to an appropriate station 22 and receiving the electric moving body 10. After having used the electric moving body 10, the user returns the electric moving body 10 to a station 22 at the location where it was received, or alternatively, at a location that differs from the location where it was received.

The electric moving body 10 includes a vehicle body 14, and a drive source 16 such as a motor or the like provided on the vehicle body 14. The electric moving body 10 supplies electrical power from one or more batteries 18 and thereby drives the drive source 16, and assists in traveling or carries out self-traveling of the vehicle body 14. As examples of this type of electric moving body 10, there may be cited an electric bicycle 20A, an electric scooter 20B, an electric wheelchair 20C, and an electric cart 20D. Moreover, the electric moving body 10 is not limited to these examples, and can be applied to moving bodies (an autonomous moving robot, a following mobile robot, a care robot, an unmanned conveyance vehicle, and the like) that move within a facility or inside the city. Moreover, as shown in FIG. 1, although a plurality of types of the electric moving body 10 (the electric bicycle 20A, the electric scooter 20B, the electric wheelchair 20C, and the electric cart 20D) are shown as examples, the sharing system 12 may be a service for sharing at least one type of the electric moving body 10.

The sharing system 12 is constructed as a client-server type of system in which a network 24 such as the Internet or the like is used. The sharing system 12 includes as components connected to the network 24 an information processing terminal 26 of the user, a management server 28, a management device 30 of the station 22, and a battery station 34 of shared batteries 32. The electric moving body 10 itself possesses a wireless communication function that enables connection to the network 24, and can be configured in a manner so as to carry out communication with the management server 28 while the user is using the electric moving body 10 or is standing by at the station 22.

As the information processing terminal 26 of the user, there may be cited a portable electronic device 36 that the user carries on a daily basis, and performs information processing based on operations of the user. In FIG. 1, a smart phone 37 is illustrated as a representative example of the electronic device 36. Alternatively, the information processing terminal 26 is not limited to being a smart phone 37, and may be a desktop computer, a laptop computer, or another portable electronic device 36 (a mobile phone, a PDA, a tablet, a wearable computer, or the like).

The electronic device 36 includes a computer containing one or more processors, memories, and input/output interfaces, none of which are shown, and is connected so as to be capable of communicating information to the network 24. Further, the electronic device 36 is equipped with an input/output unit 36a such as a touch panel, a speaker, or a microphone or the like, and together therewith, is equipped with a communication module (not shown) that is capable of enabling close proximity wireless communication with an external device. The user operates the input/output unit 36a and thereby accesses the management server 28 of the sharing system 12, and carries out input or output of information, searching, or the like in relation to the sharing system 12.

The management server 28 is installed in a management center 29 of the business operator of the sharing system 12, and is used as a host machine of the sharing system 12. The management server 28 carries out management of a plurality of registered users, and a plurality of the provided electric moving bodies 10. The management server 28 is configured in the form of a computer including one or more processors, memories, and input/output interfaces or the like, none of which are shown. The management server 28 may be constituted by linking together in cooperation a plurality of computers.

Respective stations 22 for the electric bicycles 20A, the electric scooters 20B, the electric wheelchairs 20C, and the electric carts 20D are provided at various locations in the city (for example, stations, main roads, in proximity to commercial facilities, or the like). A plurality of the electric moving bodies 10 of a predetermined type are parked at each of the stations 22. Each of the stations 22 is provided with a plurality of station lock mechanisms 38 corresponding to the number of vehicles intended to be parked therein. The station lock mechanisms 38 serve to lock each of the parked electric moving bodies 10 in a state in which they are incapable of being taken out, and in a state in which they are capable of being taken out by releasing the locks.

The management device 30 provided in each of the stations 22 includes a computer (a vehicle management unit 31) including one or more processors, memories, and input/output interfaces, none of which are shown, and a communication module, and serves to manage the electric moving bodies 10 that are parked at the station 22. For example, the management device 30 controls the operation of each of the station lock mechanisms 38, and places a predetermined electric moving body 10 in a state in which it is capable of being taken out at a time when the electric moving body 10 is rented, and on the other hand, places the electric moving body 10 that has been returned in a state in which it is incapable of being taken out. Furthermore, the management device 30 acquires moving body information (moving body identification information, a residual battery level amount of a later-described main body battery 100, etc.) from the parked electric moving body 10, and automatically transmits the acquired moving body information to the management server 28.

The battery station 34 of the shared batteries 32 accommodates a plurality of the shared batteries 32, and carries out charging on the accommodated shared batteries 32. The battery station 34 is installed, for example, in a facility 33 (a commercial facility, a store) in the city. The battery station 34 includes a computer (a battery management unit 35) including one or more processors, memories, and input/output interfaces, none of which are shown, and a communication module, and serves to manage the shared batteries 32 that are accommodated in the battery station 34. The battery management unit 35 acquires shared battery information (battery identification information, a residual battery level of the shared batteries 32, etc.) from the accommodated shared batteries 32, and automatically transmits the acquired shared battery information to the management server 28.

Further, the user who has applied for usage of the shared batteries 32 temporarily uses (carries, discharges, and charges) a shared battery 32 by going to an appropriate facility 33 and receiving the shared battery 32. After having used the shared battery 32, the user returns (accommodates) the shared battery 32 in the battery station 34 at the location where the battery was received or at a location that differs from the location where the battery was received.

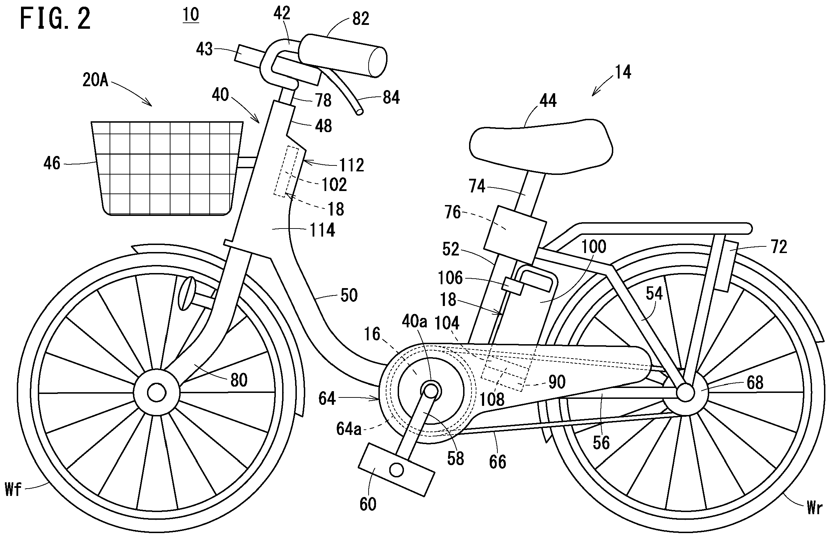

Next, with reference to FIG. 2, a description will be given representatively concerning the configuration of the electric bicycle 20A, which is an electric moving body 10 applied to the sharing system 12.

The electric bicycle 20A includes the vehicle body 14 including a vehicle body frame 40, a handlebar 42, a saddle 44, and a basket 46, and two vehicle wheels (a front wheel Wf and a rear wheel Wr) installed on the lower part of the vehicle body 14. The vehicle body frame 40 includes a front side head pipe 48, a main frame 50 extending rearward and downward from the head pipe 48, a seat pipe 52 extending upward from the rear end of the main frame 50, a pair of left and right first sub-frames 54 extending rearward and downward from the upper part of the seat pipe 52 and connected to a rear wheel supporting member that supports the rear wheel Wr, and a pair of left and right second sub-frames 56 extending rearward from a lower part of the seat pipe 52 and connected to the rear wheel supporting member.

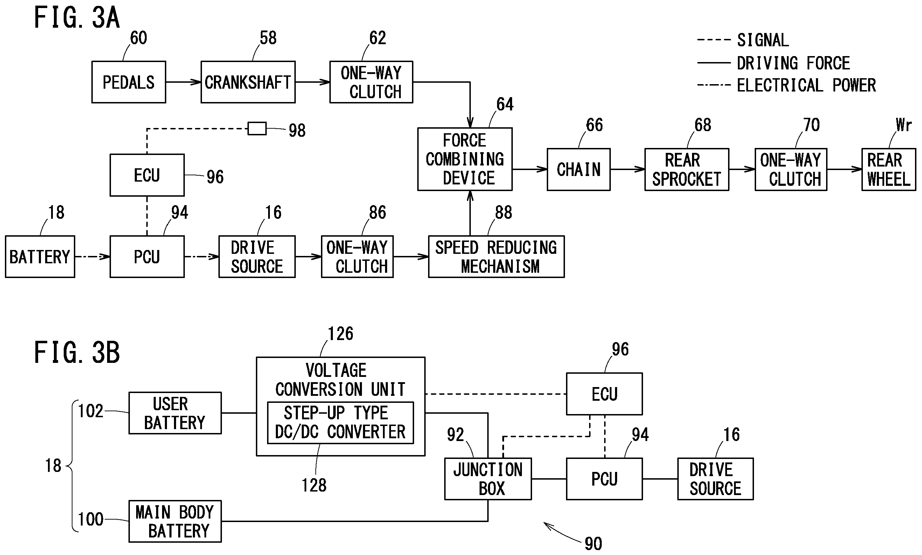

A crankshaft 58 is pivotally supported at a connection location (approximately in a middle position in a front-rear direction of the vehicle body 14) between the main frame 50 and the seat pipe 52. A pair of left and right pedals 60 are provided at extending ends of the crankshaft 58 that are extended from a shaft supporting portion 40a of the vehicle body frame 40, and the crankshaft 58 rotates under the rotation of the pair of left and right pedals 60. A one-way clutch 62 (refer to FIG. 3A) is provided in the shaft supporting portion 40a of the crankshaft 58, and together therewith, a front sprocket 64a is provided to which a rotational force (a stepping force of the user: a force to depress the pedals 60) of the crankshaft 58 is transmitted via the one-way clutch 62. The front sprocket 64a constitutes a portion of a force combining device 64 that combines the rotational force of the crankshaft 58 and the rotational driving force of the drive source 16.

Rotation of the front sprocket 64a is transmitted via a chain 66 to a rear sprocket 68 that is provided on the rear wheel Wr, and thereby causes the rear sprocket 68 to rotate. The rear sprocket 68 is connected to the rear wheel Wr via a one-way clutch 70 (refer to FIG. 3A). Accordingly, the rear wheel Wr rotates in following relation with the rotation of the rear sprocket 68. Further, a rear wheel brake (not shown) for braking the rotation of the rear wheel Wr is provided on the pair of left and right second sub-frames 56. Furthermore, on the vehicle body 14 (for example, on a carrier frame or a rear fender), there is provided a vehicle lock mechanism 72 that restricts rotation of the rear wheel Wr in a locked state, and allows rotation of the rear wheel Wr in an unlocked state.

A seat post 74 having the saddle 44 on the upper end thereof is mounted on the seat pipe 52. An actuator 76 that is capable of vertically displacing the seat post 74 based on a supply of electrical power from the battery 18 is provided on the seat pipe 52. The actuator 76 constitutes a position adjusting mechanism that adjusts a height position of the saddle 44.

A steering shaft 78, which is equipped with the handlebar 42 at an upper end thereof, is retained in the head pipe 48. The steering shaft 78 is equipped with a pair of downwardly extending left and right front forks 80, and the front wheel Wf is rotatably supported between lower ends of the front forks 80. A front wheel brake (not shown) for braking the rotation of the front wheel Wf is provided on the pair of left and right front forks 80.

The handlebar 42 includes a pair of left and right grips 82, and a pair of left and right brake levers 84. The front wheel brake is actuated when the right side brake lever 84 is operated by the user, and the rear wheel brake is actuated when the left side brake lever 84 is operated by the user.

As for the drive source 16 of the electric bicycle 20A, for example, a small motor such as a brush motor or a brushless motor is applied, which is provided in close proximity to the crankshaft 58. As shown in FIG. 3A, a rotating shaft of the drive source 16 is connected to a one-way clutch 86, and the one-way clutch 86 is connected to a speed reducing mechanism 88 via gears. The speed reducing mechanism 88 is connected to a non-illustrated assist sprocket of the force combining device 64, and a rotational force of the assist sprocket (or in other words, the drive source 16) is transmitted to the front sprocket 64a or the chain 66. An in-hole motor may be applied to the drive source 16. In this case, the drive source 16 causes the rear wheel Wr and the crankshaft 58 to be directly rotated by a rotor provided on the crankshaft 58 of the rear wheel Wr, and a stator which is arranged on an outer circumference of the rotor.

As shown in FIG. 2 and FIG. 3B, a drive control device 90 that controls the driving of the drive source 16 is disposed between the pair of left and right second sub-frames 56. The drive control device 90 is equipped with a junction box 92 to which a plurality of harnesses are connected, a PCU 94 (power control unit) connected to the junction box 92 and which converts DC power into three-phase AC power and supplies the AC power to the drive source 16, and an ECU 96 (electronic control unit) that controls the junction box 92, the PCU 94, and the like. The drive control device 90 adjusts the supply of electrical power to the drive source 16, in accordance with detection signals from a torque sensor provided in close proximity to the crankshaft 58, and a rotation sensor provided in close proximity to the rear wheel Wr (hereinafter, collectively referred to as a required electrical power sensor 98 (refer to FIG. 3A)).

As shown in FIG. 3A, the electric bicycle 20A described above sequentially transmits in this order a pedaling force of the user to the pedals 60, the crankshaft 58, the one-way clutch 62, the force combining device 64 (the front sprocket 64a), the chain 66, the rear sprocket 68, the one-way clutch 70, and the rear wheel Wr. Further, under the control of the drive control device 90, by the electrical power of the battery 18 being transmitted from the PCU 94 to the drive source 16, the drive source 16 is rotated. The rotational force of the drive source 16 is sequentially transmitted in this order to the one-way clutch 86, the speed reducing mechanism 88, the force combining device 64 (assist sprocket), the chain 66, the rear sprocket 68, the one-way clutch 70, and the rear wheel Wr. Consequently, the pedaling operation by the user is assisted by the driving force of the drive source 16, in a manner so that the user can comfortably ride the electric bicycle 20A.

In addition, as shown in FIG. 2 and FIG. 3B, the electric bicycle 20A according to the present embodiment can use a plurality of the batteries 18. Specifically, the plurality of batteries 18 each include the main body battery 100 installed beforehand on the vehicle body 14 by the operator of the sharing system 12, and a user battery 102 possessed by the user and which is detachably installed on the vehicle body 14 at a time when the electric moving body 10 is used.

For the main body battery 100, basically, there is applied a battery having a larger charging capacity than that of the user battery 102, and which is large in scale and heavy in weight, and is replaced or recharged by a worker of the business operator who performs such a replacement operation. Although it depends on the type of the electric moving body 10, the main body battery 100, for example, preferably includes an output voltage of greater than or equal to 20 V and a capacity of greater than or equal to 8 Ah.

In a state of being installed on the electric bicycle 20A, the main body battery 100 is positioned between the seat pipe 52 and the rear wheel Wr, and is fixed in a posture in which it is extended along the seat pipe 52. The main body battery 100 is detachably installed in a first holder 104 provided between the pair of left and right first sub-frames 54 and between the pair of left and right second sub-frames 56. A main body side locking device 106 that locks the removal of the main body battery 100 from the first holder 104 is provided on the seat pipe 52 or on the first sub-frames 54.

Further, a first holder sensor 108 (a voltage sensor or the like, refer to FIG. 2), which detects the state of the main body battery 100 in order to calculate the residual battery level of the main body battery 100, is provided in the first holder 104. The first holder sensor 108 is connected to the ECU 96, and transmits detection signals to the ECU 96. Moreover, concerning the main body battery 100, the main body battery 100 itself may be equipped with a function of detecting and a function of calculating the residual battery level along with a communication function, and may be configured to automatically transmit the residual battery level to the ECU 96, the management device 30, or the management server 28.

For the user battery 102, there is applied a battery having a smaller charging capacity than that of the main body battery 100, and the user battery 102 is configured to be smaller in scale and lighter in weight than the main body battery 100. Although the capacity of the user battery 102 is not particularly limited, for example, a battery possessing a capacity of greater than or equal to 2 Ah is preferred.

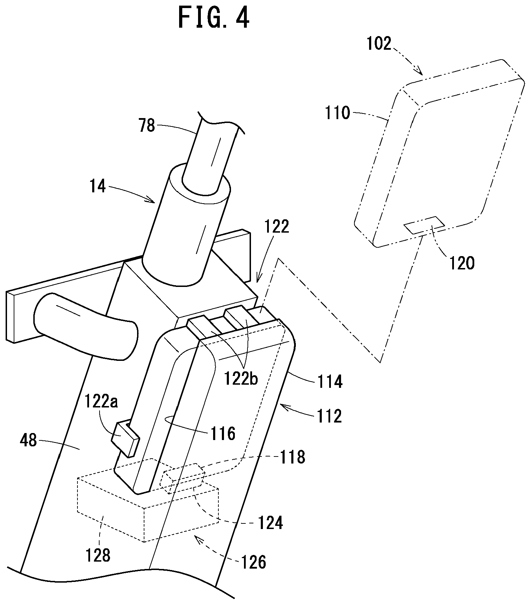

As shown in FIG. 4, for the user battery 102, there can be used a mobile battery 110 possessed by the user in order to charge the electronic device 36 (the smart phone 37: refer to FIG. 1, a tablet, or the like). Such a mobile battery 110 includes on a peripheral side surface thereof an electrical power port 120 that is capable of outputting electrical power. Alternatively, for the user battery 102, there may be applied a battery (not shown) that is integrally installed in the electronic device 36 and is used for operating the electronic device 36 itself. For the electronic device 36 that is used as the user battery 102, there is used an electronic device having the electrical power port 120 that is capable of outputting to the exterior the electrical power of the battery of the electronic device 36. Moreover, although in FIG. 4, there is shown a thin rectangular parallelepiped shaped mobile battery 110, the shape of the user battery 102 is not particularly limited, insofar as it is capable of being retained in a later described second holder 112. For the user battery 102, there may also be applied a shared battery 32 that is borrowed by the user from the battery station 34.

As shown in FIG. 2 and FIG. 4, the electric bicycle 20A is provided with the second holder 112 in which the user battery 102 is accommodated on a rear side of the head pipe 48 (on an opposite side of the basket 46 with the head pipe 48 interposed therebetween). For this reason, the head pipe 48 is formed so as to have a thickness in a longitudinal direction and a widthwise direction of the vehicle body 14. The second holder 112 includes an accommodating housing 114 that is integrally connected to the head pipe 48. The accommodating housing 114 extends along the head pipe 48 from an upper end part of the head pipe 48 where the steering shaft 78 is exposed to the connection location with the main frame 50.

A slit 116 in order to retain the user battery 102 is provided in the accommodating housing 114. The slit 116 is constituted by continuously opening an upper surface and both lateral side surfaces of the accommodating housing 114, and various user batteries 102 can be inserted from the upper side of the accommodating housing 114. A cushioning member (not shown) that alleviates vibrations applied to the user battery 102 from the vehicle body 14 may be provided on an inner wall surface constituting the slit 116 in the accommodating housing 114.

Further, a connecting connector 118 electrically connected to the user battery 102 is provided on (a bottom surface of) the inner wall surface. For example, when the user inserts the user battery 102 from above into the accommodating housing 114 along the direction in which the slit 116 extends, the electrical power port 120 on the lower side of the user battery 102 is connected to the connecting connector 118. Alternatively, the second holder 112 may be provided on the inner wall surface thereof with a cable that is capable of being connected to the electrical power port 120 of the user battery 102, and an accommodating hole in which the cable is accommodated (neither of which is shown). In this case, a configuration may be employed in which the cable, which has been taken out by the user, is connected to the user battery 102, and thereafter, the user battery 102 is inserted into the slit 116.

The second holder 112 preferably includes a detachment prevention mechanism 122 that prevents the user battery 102 from being detached. For example, the detachment prevention mechanism 122 includes, on the side of the accommodating housing 114, a side arm 122a that can be adjusted in length to coincide with the size of the user battery 102, and a lock bar 122b that can be projected out and drawn inward at the opening that is located upward of the accommodating housing 114. The detachment prevention mechanism 122 carries out locking by projecting out the lock bar 122b at a time when the user battery 102 is inserted, and further, releases such locking under the operation of a non-illustrated unlocking input unit (for example, input of a password, operation of a physical key, or a radio signal).

Further, in the interior of the second holder 112, an information acquisition unit 124 in order to acquire information (at least one from among identification information, an output voltage, a charging capacity, a residual battery level, etc.) of the user battery 102 is provided. The information acquisition unit 124 is configured by one of a communication module, a voltage sensor, or another sensor or by combining a plurality of them, and is connected to enable communication with the ECU 96.

On a lower side of the slit 116 in the second holder 112, a voltage conversion unit 126 is provided that boosts the voltage of the input voltage that is input from the user battery 102, and decreases the voltage of the input voltage that is input from the main body battery 100. As shown in FIG. 3B, the voltage conversion unit 126 is interposed in an electrical power pathway between the user battery 102 that is set in the second holder 112 and the junction box 92. Specifically, in the voltage conversion unit 126, there is included a step-up type DC/DC converter 128 that is used for boosting the voltage, and a DC/DC converter (not shown) that is used for decreasing the voltage. The voltage conversion unit 126 may be a bidirectional converter having functions both for boosting the voltage and for decreasing the voltage.

The junction box 92 is connected via electrical wiring to the main body battery 100, the voltage conversion unit 126, (the user battery 102), and the PCU 94. Under the control of the ECU 96, the junction box 92 switches the electrical power pathway and the distribution of electrical power between the main body battery 100 and the user battery 102.

The ECU 96 is configured in the form of a computer having one or more of processors, memories, and input/output interfaces. The ECU 96 performs an electrical power supply control of the main body battery 100 and the user battery 102, by the processor executing a program that is stored in the memory, accompanying an operation of turning ON an electrical power source of a non-illustrated operation unit of the electric moving body 10. Further, via a non-illustrated communication module, the ECU 96 carries out communication of information with the management device 30 of the station 22 or the management server 28. Furthermore, the electric moving body 10 is equipped with a positioning system (not shown) such as a GNSS or the like, and is configured in a manner so as to periodically observe and measure the current position. The ECU 96 may be installed on the electric moving body 10, which is provided beforehand with a control unit having a communication function, a control unit having a later-described authentication function, a control unit having a locking function, and the like.

Further, returning to FIG. 2, the electric moving body 10 may also include a touch panel 43 in a central portion in a widthwise direction of the handlebar 42. The touch panel 43 includes one or more of processors, memories, and input/output interfaces, and a communication module, and is connected so as to be capable of communicating information with respect to the management server 28 and the ECU 96 of the electric moving body 10. The touch panel 43 is configured in a manner so as to display various information provided from the management server 28 and the ECU 96, together with making it possible for the user to input settings for the electric moving body 10.

Next, a description will be given concerning a method of using the sharing system 12 in which a plurality of users share the electric moving body 10 as described above, and the configuration of the information processing terminal 26, the management server 28, the management device 30, and the electric moving body 10 in each of respective steps of the method of using.

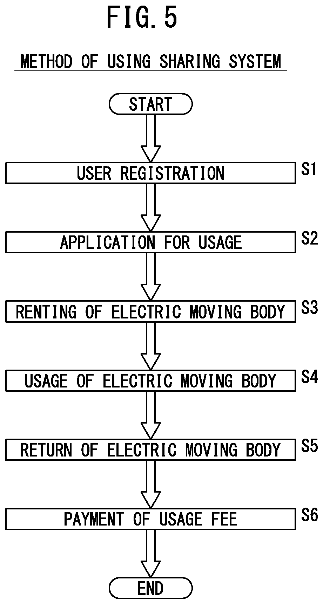

As shown in FIG. 5, at a time when using the sharing system 12, the user sequentially executes a user registration (step S1), an application for usage (step S2), renting of the electric moving body 10 (step S3), usage of the electric moving body 10 (step S4), return of the electric moving body 10 (step S5), and payment of a usage fee (step S6). The management server 28, by managing each of the steps of the method of usage, comprehensively monitors the state of the user, the state of the electric moving body 10, the state of the shared battery 32, and the like.

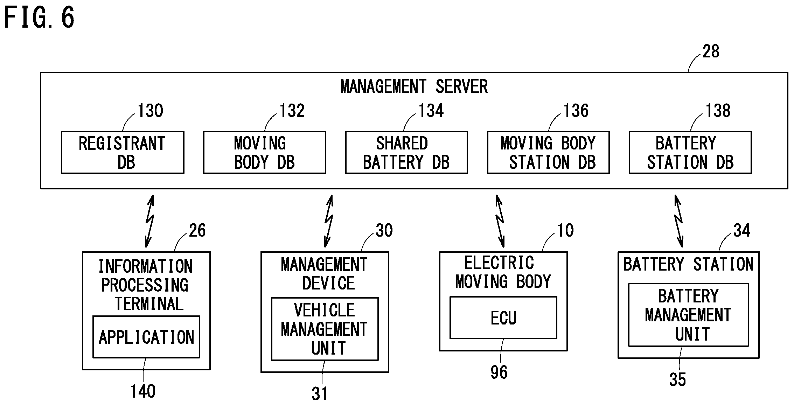

In order to perform such management, as shown in FIG. 6, the management server 28 includes a registrant database 130 (registrant DB), a moving body database 132 (moving body DB), a shared battery database 134 (shared battery DB), a moving body station database 136 (moving body station DB), and a battery station database 138 (battery station DB).

The registrant DB 130, the moving body DB 132, the shared battery DB 134, the moving body station DB 136, and the battery station DB 138 are linked so as to be capable of being federated with each other. Therefore, in the case that information (for example, the residual battery level of the main body battery 100 of the electric moving body 10) within one of the DBs is updated, the information within the other DBs is also updated.

The management server 28 is constituted so as to enable communication of information between the ECU 96 of each of the electric moving bodies 10 of the sharing system 12 and the vehicle management unit 31 of each of the management devices 30. The management server 28 appropriately collects information of the ECU 96 and information of the vehicle management unit 31, and updates the moving body DB 132 and the moving body station DB 136 as needed. Similarly, the management server 28 is configured to be capable of communicating information with the battery management unit 35 of the battery station 34, appropriately collects information on the shared battery 32, and updates the shared battery DB 134 and the battery station DB 138 as needed.

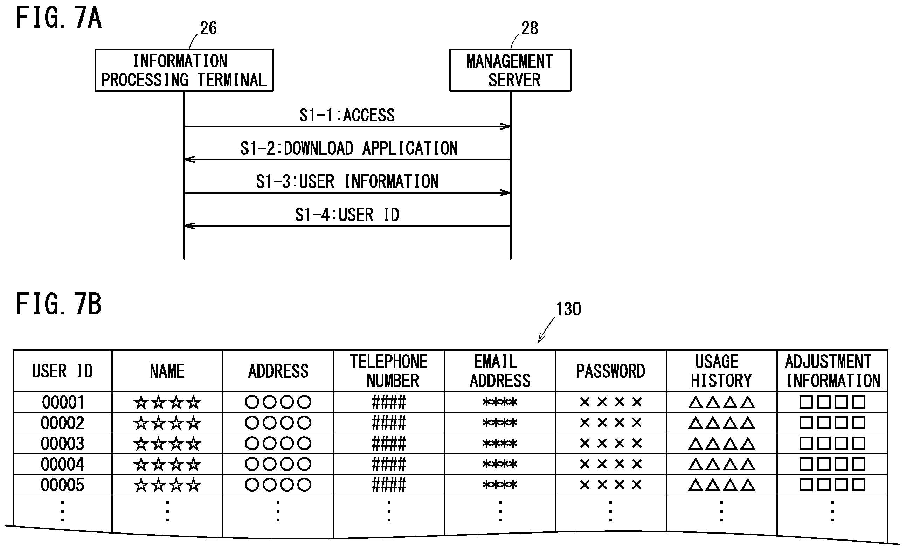

On the other hand, the information processing terminal 26 of the user accesses the management server 28, and thereby acquires from the management server 28 information necessary for using the sharing system 12. For example, in the user registration (step S1: refer to FIG. 5), as shown in FIG. 7A (step S1-1), the user accesses the management server 28 from the information processing terminal 26. Then, the user downloads and installs an application 140 from the management server 28 in the information processing terminal 26 (step Sl-2). Consequently, the application 140 of the information processing terminal 26 facilitates transmission and reception of information to and from the management server 28. Moreover, it should be noted that by downloading a dedicated homepage instead of the application 140, the information processing terminal 26 may be configured in a manner so as to be capable of inputting information and searching for information.

Thereafter, in the application 140 or the homepage, the user opens an input screen in order to register with the sharing system 12, and inputs the user information required for registration. As the user information, there may be cited, for example, a name, an address, a telephone number, an email address, a password, and the like. After having input the user information on the information processing terminal 26, the user transmits the user information from the information processing terminal 26 to the management server 28 (step S1-3).

Upon receipt of the user registration along with the reception of the user information, the management server 28 issues user identification information (hereinafter referred to as a user ID), and transmits the user ID to the information processing terminal 26. Consequently, the application 140 of the information processing terminal 26 becomes capable of storing and managing the user ID. Moreover, user IDs may be set by the users themselves.

The management server 28 stores the user information of a new user in the registrant DB 130. Consequently, as shown in FIG. 7B, the user ID and the user information (a name, an address, a telephone number, an email address, a password, and the like) for each of the users are stored in a mutually associated state in the registrant DB 130. Further, the registrant DB 130 also includes a usage history column in which there is stored, on a per-user basis, a usage history when a user has used the electric moving body 10, and an adjustment information column in which there is stored, on a per-user basis, adjustment information in order to adjust the electric moving body 10. As the usage history, there may be cited a number of times of usage, a starting date and time of usage and an ending date and time of usage in which the electric moving body was used in the past, a number of times and time periods of an extension of usage, a number of breakdown or damage occurrences, and the like.

By the user registration step described above, the user ID is stored in the application 140, and the user ID can be automatically assigned at a time when information is transmitted to or received from the management server 28. Further, based on the user ID, the management server 28 becomes capable of searching for users within the registrant DB 130, and can rapidly extract a target user. Moreover, assuming that the usage is conducted temporarily by the user, the sharing system 12 may be configured in a manner so as to enable the electric moving body 10 to be used without executing the user registration (assignment of a user ID) shown in FIG. 5.

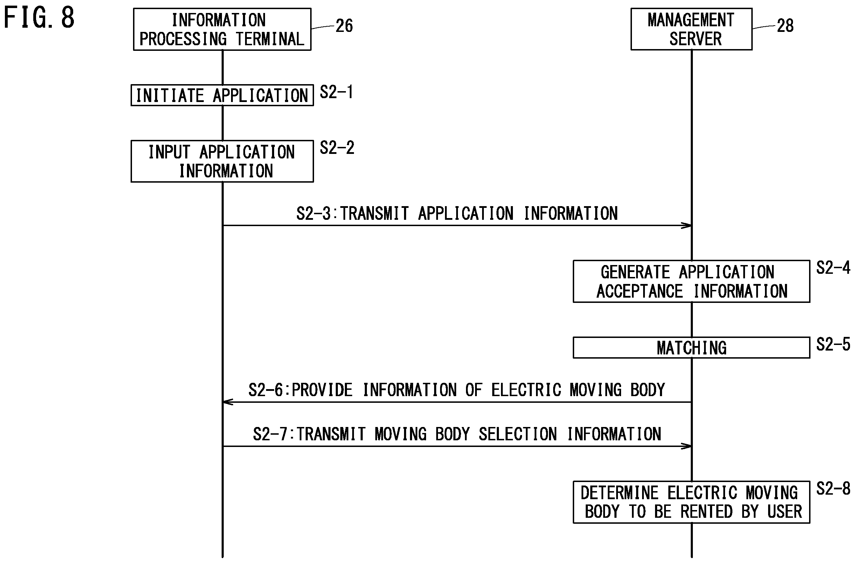

Thereafter, in an application of usage of the sharing system 12 (step S2: refer to FIG. 5), the user operates the information processing terminal 26, and applies to the management server 28 for usage of the electric moving body 10. Next, a processing flow of the application for usage will be described with reference to FIG. 8. In such an application for usage, the user initiates the application 140 of the information processing terminal 26 (or alternatively, downloads the homepage for application of usage from the management server 28) (step S2-1) .

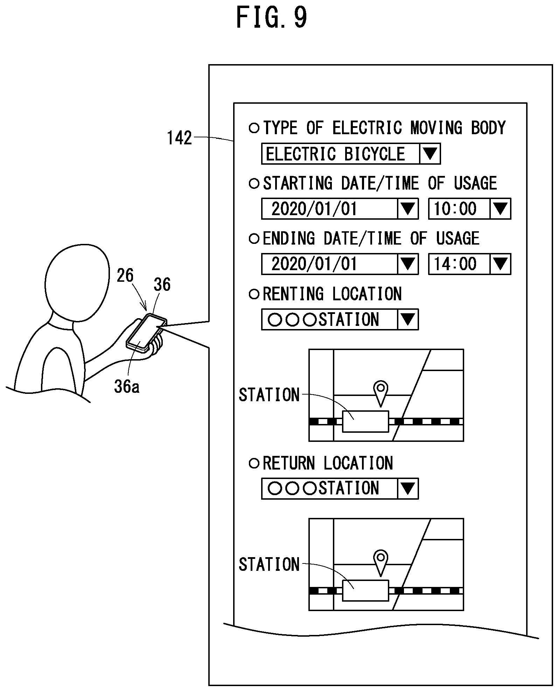

In addition, the user inputs the application information following along with screen information 142 that is displayed on the information processing terminal 26 (step S2-2). For example, as shown in FIG. 9, in the screen information 142 for generating the application information, there are included the type of electric moving body 10, the starting date and time of usage, the ending date and time of usage, a renting location (or a current position), and a return location. The usage conditions may be configured in a manner so that a destination when the electric moving body 10 is used is input instead of the return location (or together with the return location). The application 140 (or the homepage) may use the previously acquired address of the user information and the current position of the user, and thereby may preferentially provide stations 22 in the surrounding vicinity of the user as a renting location or a return location, and further, may also display map information of the stations 22.

After having input the application information, the user transmits the application information including the user ID and the password from the information processing terminal 26 to the management server 28 (step S2-3). Consequently, based on the user ID, the management server 28 extracts the user information from the registrant DB 130, and upon determining that the password coincides with the user information, generates application acceptance information 144 (step S2-4).

Furthermore, on the basis of the application acceptance information 144, the management server 28 matches the user who has applied for usage with an electric moving body 10 that is capable of being rented (step S2-5). In addition, the management server 28 transmits the information of the electric moving body 10, which was extracted due to matching, to the information processing terminal 26, and provides the information of the electric moving body 10 with respect to the user who applied (step S2-6). The user selects an electric moving body 10 to be rented by searching for and confirming the electric moving body 10 whose information was provided, and transmits the moving body selection information to the management server 28 (step S2-7). Consequently, the management server 28 determines the electric moving body 10 to be rented by the user (step S2-8).

In this instance, the sharing system 12 according to the present embodiment is configured in a manner so as to transmit the information of the user battery 102 from the user to the management server 28. As the information of the user battery 102, there may be cited battery identification information (a battery ID), a residual battery level, a maximum output electrical power, and the like. In accordance with such information, the sharing system 12 carries out matching of the electric moving body 10, based on the residual battery level of the user battery 102 at the time of matching (step S2-5). Further, the sharing system 12 performs user authentication based on the battery ID at the time when the electric moving body 10 is rented (step S3), as will be described later.

Accordingly, when the application information is input, in addition to the starting date and time of usage, the ending date and time of usage, the renting location, and the return location, which were described previously, the user also inputs information (a battery ID, a residual battery level, a maximum output electrical power, and the like) of the user battery 102. Concerning the battery ID, a battery ID that is assigned in advance to the user battery 102 can be used. For example, if a mobile battery 110 is used, an identifier assigned by a manufacturer to each of respective mobile batteries 110 can be used. In the case that the user battery 102 does not have a battery ID, the sharing system 12 may be configured in a manner so as to automatically assign a battery ID from the information processing terminal 26 with respect to the user battery 102 that is connected to the information processing terminal 26. Alternatively, the management server 28 may be configured in a manner so as to assign a battery ID in order of the information processing terminal 26 and the user battery 102.

Further, in the case that the shared battery 32 is used as the user battery 102, the management server 28 may extract and store the battery ID of the shared battery 32 itself when the shared battery 32 is borrowed by the user. In accordance with this feature, by inputting that the shared battery 32 will be used at the time when the user submits an application for usage of the electric moving body 10, it is acceptable not to input the battery ID.

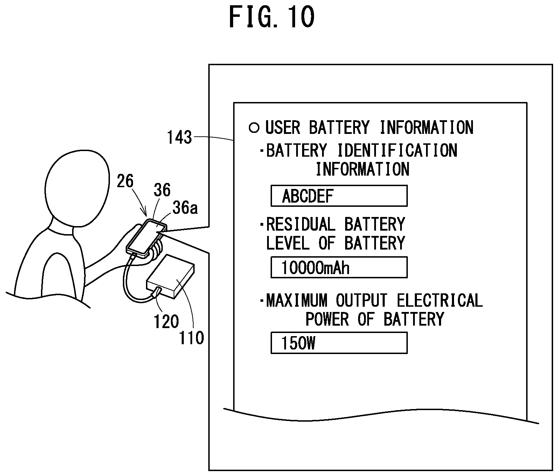

Further, in the case that the user inputs the residual battery level and the maximum output electrical power of the user battery 102, the user inputs such values at the time of the application for usage. For example, the user inputs to the information processing terminal 26 the residual battery level and the maximum output electrical power which is displayed or pasted on the user battery 102. Alternatively, as shown in FIG. 10, by carrying out communication of information between the information processing terminal 26 and the control circuitry (not shown) of the user battery 102 via USB or the like, the application 140 may be constructed so as to automatically extract the information of the user battery 102 in the form of screen information 143. In accordance with this feature, trouble and mistakes caused by manual input of the user are reduced. Further, in the case of there being a time interval from the time of the application for usage and the date and time of implementing usage of the electric moving body 10, since the user is capable of charging the user battery 102, the user may enter a maximum battery capacity as the residual battery level of the user battery 102.

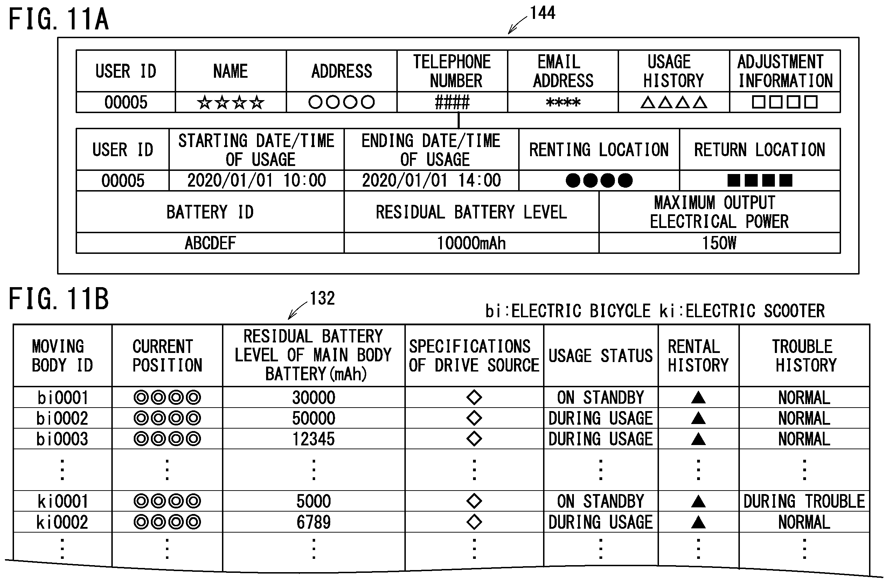

Upon receiving the application information from the information processing terminal 26, the management server 28 extracts the user information of the user who applied from the registrant DB 130, and as shown in FIG. 11A, generates the application acceptance information 144 in which the user information and the application information are associated. For example, the application acceptance information 144 becomes information in which there are included the user ID, the name, the address, the telephone number, the email address, the usage history, the adjustment information, the starting date and time of usage, the ending date and time of usage, the renting location (or a current position), the return location (or a destination), the battery ID, the residual battery level, and the maximum output electrical power.

After having generated the application acceptance information 144, the management server 28 carries out matching (step S2-5: FIG. 8) . In such matching, the management server 28 reads out the moving body DB 132 and the moving body station DB 136, together with extracting the electric moving body 10 that is capable of being rented based on the application acceptance information 144.

For example, as shown in FIG. 11B, for each of a plurality of the electric moving bodies 10, the moving body DB 132 has stored therein the moving body identification information (the moving body ID), the current position, the residual battery level of the main body battery 100, specifications of the drive source 16, a usage status, a past rental history, and a trouble history. The management server 28 periodically carries out communications with the management device 30 of the stations 22 or the ECU 96 of the electric moving bodies 10, and thereby updates the current position, the residual battery level of the main body battery 100, and the like. Further, although illustration thereof is omitted, the moving body station DB 136 stores, for example, the positions of the stations 22, the moving body ID of each of the electric moving bodies 10 that are parked therein, the residual battery level of each of the main body batteries 100, and the operating state of each of the station lock mechanisms 38.

In the matching, based on the usage conditions and the residual battery level and the maximum output electrical power of the user battery 102 included in the application acceptance information 144, the management server 28 extracts an electric moving body 10 that is capable of being used from the moving body DB 132.

For example, in the management server 28, first, from among the usage conditions, based on the type of the electric moving body 10, the starting date and time of usage, and the renting location (or the current position) of the electric moving body 10, the electric moving bodies 10 which are scheduled to be available for renting at or in the vicinity of the renting location at the starting date and time of usage are limited. Next, while referring to the maximum output electrical power of the user battery 102 and the specifications of the drive sources 16 of each of such limited electric moving bodies 10, the management server 28 applies a ranking to the electric moving bodies 10 that the user battery 102 is compatible with. For example, the management server 28 applies a sequential ranking to the electric moving bodies 10 for which the maximum output electrical power of the user battery 102 and the electrical power of the drive source 16 are close to each other. Further, at this time, in the case of there being an electric moving body 10 that is incompatible with the maximum output electrical power of the user battery 102 (in the case that the electrical power of the drive source 16 is not reached even using the step-up type DC/DC converter 128), such an electric moving body 10 is excluded.

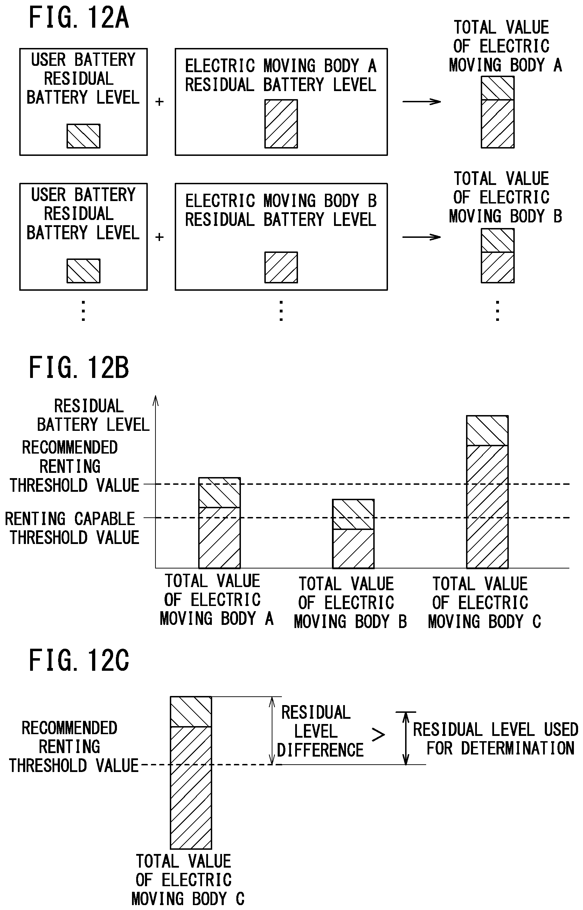

Furthermore, the management server 28 refers to the residual battery level of the user battery 102 and the residual battery level of the main body batteries 100 of each of the ranked electric moving bodies 10, and thereby narrows down the electric moving bodies 10 accordingly. As an example thereof, as shown in FIG. 12A, the management server 28 adds the residual battery level of the main body battery 100 and the residual battery level of the user battery 102, and thereby calculates an overall residual battery level (a total value) for each of the extracted electric moving bodies 10 (electric moving bodies A, B, and so forth).

Then, as shown in FIG. 12B, the management server 28 selects an electric moving body 10 whose calculated total value exceeds a recommended renting threshold value. The recommended renting threshold value is an index value that enables the user to use the electric moving body 10 comfortably (without worrying about charging). The recommended renting threshold value may be a value that varies based on the usage period (the starting date and time of usage, the ending date and time of usage) included in the application acceptance information 144.

In the case that the calculated total value is less than or equal to the recommended renting threshold value, next, the management server 28 determines whether or not the total value exceeds a renting capable threshold value. The renting capable threshold value is a value that is predicted to make it impossible for the residual battery level of the main body battery 100 and the user battery 102 to become zero (without requiring charging during usage thereof) in an average amount of electrical power usage during the usage period. Therefore, the renting capable threshold value is set to a value that is lower than the recommended renting threshold value. In this manner, by extracting electric moving bodies 10 in which the renting capable threshold value is exceeded, even in the case that the residual battery level of each of the electric moving bodies 10 (the main body batteries 100) in the vicinity of the renting location is low overall, the number of electric moving bodies 10 that are capable of being rented can be increased.

Conversely, as shown in FIG. 12C, in the case that the calculated total value significantly exceeds the recommended renting threshold value, the management server 28 may determine not to select an electric moving body 10. For example, as shown in FIG. 12C, the management server 28 determines a residual level difference, which is obtained by subtracting the recommended renting threshold value from the total value of an electric moving body C, and the magnitude of a residual level used for determination. Since the residual level difference of the electric moving body C exceeds the residual level used for determination, the management server 28 does not select the electric moving body C. This is because renting of the electric moving body 10 in which the total value is large to another user is more likely to enable the electric moving body 10 to be efficiently operated by the sharing system 12 as a whole.

Further, in the matching, the management server 28 may be configured in a manner so as to estimate the amount of battery usage based on the usage conditions of the application acceptance information 144, and select each of the electric moving bodies 10 whose estimated amount of battery usage falls within the total value. Based on the type of the electric moving body 10 (the electrical power of the drive source 16, etc.) and the usage period (the starting date and time of usage and the ending date and time of usage) included in the usage conditions, the amount of battery usage can be estimated from an average amount of electrical power consumption of a predetermined type of the electric moving body 10 during the usage period. Further, the amount of battery usage can be estimated by calculating a movement route (or a movement distance) based on the type of the electric moving body 10 and the renting location and the return location (or the destination) included in the usage conditions, and from the average amount of electrical power consumption when the predetermined type of electric moving body 10 is moved along such a movement route. Further, the management server 28 may also be configured in a manner so as to set the recommended renting threshold value and the renting capable threshold value based on the amount of battery usage.

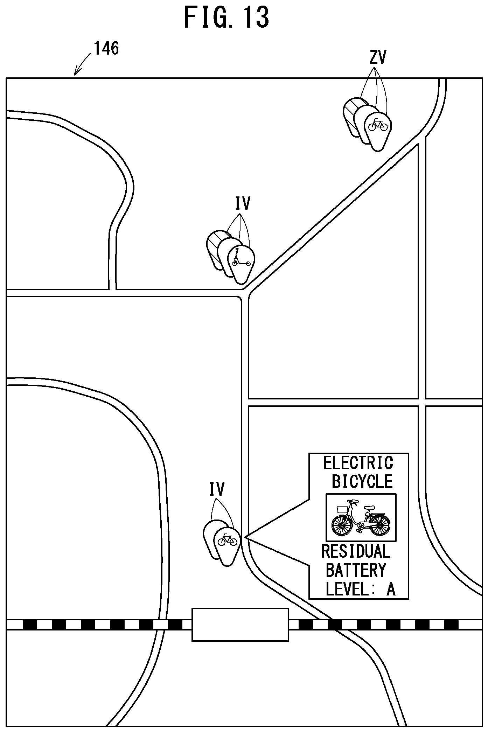

By the matching step described above, in the information processing terminal 26 of the user, there is provided information concerning the predetermined type of electric moving body 10 from the management server 28, and information IV of the electric moving bodies 10 is displayed on the input/output unit 36a of the information processing terminal 26. For example, as shown in FIG. 13, the information IV of the electric moving bodies 10 is indicated by markings on map screen information 146, and by the user selecting (touching, clicking on) a marking, a configuration is provided so as to display detailed information of the electric moving body 10.

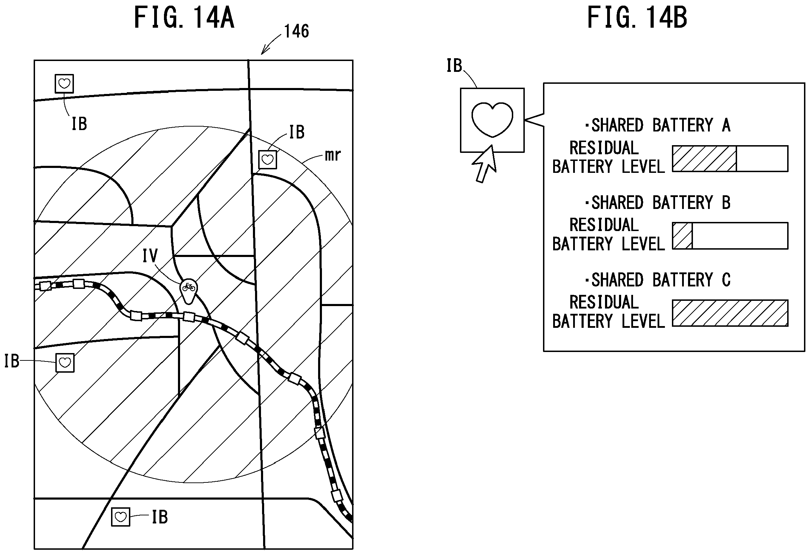

As the detailed information of the electric moving bodies 10, for example, as shown in FIG. 14A, on the map screen information 146, there may be shown a movement capable range mr of the electric moving bodies 10 based on the total value of the residual battery level of the main body battery 100 and the residual battery level of the user battery 102. The movement capable range mr can be obtained by calculating the travel capable distance based on the total value calculated for each of the electric moving bodies 10. In this manner, in the provided information, by showing the movement capable range mr of each of the electric moving bodies 10, the users are capable of selecting an appropriate electric moving body 10 in accordance with their purpose of use.

Preferably, the management server 28 refers to the shared battery DB 134 or the battery station DB 138, and at the time of providing the information of the electric moving bodies 10 (step S2-6), also displays together therewith the position information of the battery stations 34. Consequently, by comparing the movement capable range mr of the electric moving bodies 10 and the battery stations 34, the user can devise a travel plan.

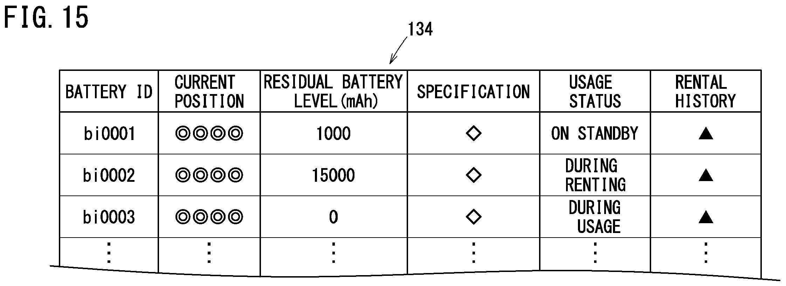

As shown in FIG. 15, in the shared battery DB 134, there are stored the battery ID, the current position, the specifications (the output voltage, the output electrical power, the maximum battery capacity, etc.), the residual battery level (or the SOC), the usage status, and a past rental history for each of the shared batteries 32. Further, although illustration thereof is omitted, in the battery station DB 138, there are also stored the installation position, and the battery ID, and the residual battery level (or the SOC) and the like of each of the shared batteries 32 that are accommodated.

On the basis of the shared battery DB 134 and the battery station DB 138, for example, the management server 28 displays information IB of the battery stations 34 on the map screen information 146 (refer to FIG. 14A). In the case there is not a single shared battery 32 in the battery stations 34, and further, in the case that the residual battery levels of all of the accommodated shared batteries 32 is less than or equal to a predetermined threshold value, even if they exist, the battery stations 34 will not be displayed on the map screen information 146.

Furthermore, the information of the battery stations 34 that is displayed on the map screen information 146 preferably is capable of displaying the residual battery level of each of the shared batteries 32 that are accommodated in the battery stations 34. As an example thereof, as shown in FIG. 14B, when the user clicks on the information IB of a battery station 34, a list of each of the shared batteries 32 that are accommodated, and information indicating the residual battery level of each of the shared batteries 32 are displayed.

Alternatively, in the case that the return location (or the destination) of the electric moving body 10 is included in the application acceptance information 144, then as detailed information of the electric moving body 10, the management server 28 calculates the movement route, and calculates the amount of battery usage that is estimated from the calculated movement route. Consequently, at the time when the electric moving body 10 is selected, the user can confirm the movement route and the amount of battery usage displayed on the information processing terminal 26, and can select an appropriate electric moving body 10.

Based on the provided information transmitted from the management server 28 in the manner described above, on the information processing terminal 26, the user can appropriately select an electric moving body 10 that the user wants to use. Together with receiving the moving body selection information selected by the user, and associating with each other the information of the selected electric moving body 10 and the application acceptance information 144, the management server 28 updates the usage status of the moving body DB 132 in a rental schedule. In addition, in the case of there being an application for usage from another user, the management server 28 does not extract the electric moving body 10 that is intended to be rented.

Returning to FIG. 5, next, a description will be given concerning a process when the user rents an electric moving body 10 (step S3). When a user rents an electric moving body 10, the sharing system 12 checks the user who has applied for usage of the electric moving body 10, against the electric moving body 10 that actually will be rented by the user, and thereby determines whether or not the user is a legitimate user. In particular, the sharing system 12 according to the present embodiment performs user authentication using the battery ID of the user battery 102.

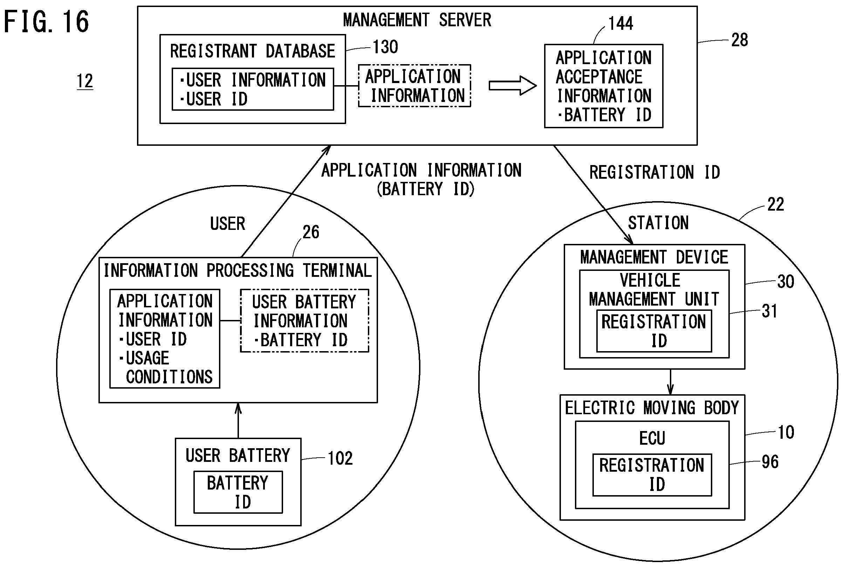

Specifically, as shown in FIG. 16, in the application information at the time of application for usage, there is included the battery ID of the user battery 102 that is input or acquired by the user. Upon receiving the application information, the management server 28 generates the application acceptance information 144 including the battery ID as was described above (refer to FIG. 11A). When the management server 28 receives the moving body selection information selected by the user and determines the electric moving body 10 to be rented by the user, the management server 28 manages the battery ID contained in the application acceptance information 144 until prior to the user actually renting the electric moving body 10.

In addition, prior to the user using the electric moving body 10, the management server 28 transmits the battery ID that is being managed as registration identification information (hereinafter, referred to as a registration ID) to the ECU 96 of the electric moving body 10 that is actually used by the user. Stated otherwise, the management server 28 functions as an identification information management unit that serves to register the registration ID in the electric moving body 10. The management server 28 transmits the registration ID to the electric moving body 10 at a predetermined time (for example, several minutes to a few hours before) prior to the starting date and time of usage in which the electric moving body 10 is used by the user.

In transmitting the registration ID, the sharing system 12 may be configured in a manner so as to transmit the registration ID to the electric moving body 10 via the management device 30 (an example of such a pattern is shown in FIG. 16) or to directly transmit the registration ID via the network 24 to the electric moving body 10. The registration ID is stored in the management device 30 itself by being passed through the management device 30, and can also be used for management of the electric moving body 10 by the management device 30.

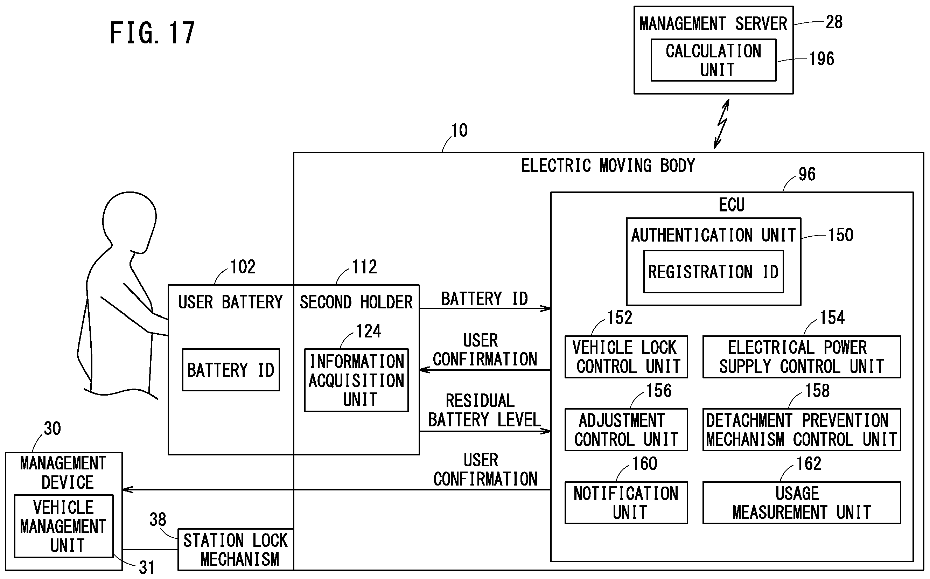

As shown in FIG. 17, within the ECU 96 of the electric moving body 10, an authentication unit 150 is constructed in order to perform user authentication by the processor executing and processing a non-illustrated program that is stored in the memory. The authentication unit 150 stores the registration ID transmitted from the management server 28 in the memory prior to the user battery 102 being installed. Moreover, preferably, the electric moving body 10 automatically maintains the locked state by the vehicle lock mechanism 72 (refer to FIG. 2) in a state in which the registration ID is not transmitted. In a similar manner, in a state in which the registration ID is not transmitted, it is preferable that the management device 30 also automatically continues the locking of the station lock mechanism 38.

The authentication unit 150, accompanying the user battery 102 possessed by the user being installed in the second holder 112 of the electric moving body 10, acquires the battery ID from the user battery 102 via the information acquisition unit 124. Along with acquisition of the battery ID, the authentication unit 150 carries out user authentication by referring to the battery ID and the retained registration ID. Stated otherwise, in the user authentication, the authentication unit 150 determines whether the battery ID and the registration ID coincide or do not coincide with each other. In addition, in the case of the IDs coinciding, the user of the electric moving body 10 is authenticated (hereinafter, the state of the user being authenticated will be referred to as user confirmation). Moreover, also after the user has been confirmed once, and by periodically carrying out the user authentication, it is preferable for the authentication unit 150 to continue to confirm the continued usage of the electric moving body 10 by the user.

When the user of the electric moving body 10 is authenticated by the authentication unit 150, the ECU 96 shifts the electric moving body 10 from a travel restricted state to a travel permitted state. Therefore, within the ECU 96, in addition to the authentication unit 150, there are constructed a vehicle lock control unit 152, an electrical power supply control unit 154, an adjustment control unit 156, a detachment prevention mechanism control unit 158, a notification unit 160, a usage measurement unit 162, and the like.

The vehicle lock control unit 152 is a functional unit that controls the vehicle lock mechanism 72, and is configured so as to automatically be operated based on the authentication of the user by the authentication unit 150. For example, until the user is confirmed, the electric moving body 10 is placed in the travel restricted state by being locked by the vehicle lock mechanism 72. Based on the user confirmation, the vehicle lock control unit 152 carries out unlocking of the vehicle lock mechanism 72. Consequently, the electric moving body 10 transitions from the travel capable state to the travel permitted state.

Further, for example, the electric moving body 10 is placed in the travel restricted state in which the drive source 16 is not driven, by prohibiting the supply of electrical power to the drive source 16 from the main body battery 100 and the user battery 102 by the electrical power supply control unit 154 until prior to the user confirmation. When the user is confirmed, the electrical power supply control unit 154 supplies electrical power to the drive source 16 from the main body battery 100 and the user battery 102, and thereby transitions to the travel permitted state in which the drive source 16 is driven. Furthermore, in the case of the station lock mechanism 38 being placed in a state in which the electric moving body 10 is incapable of being taken out, the vehicle management unit 31 of the management device 30 carries out unlocking based on the reception of the user confirmation signal from the ECU 96, and places the electric moving body 10 in a state in which it is capable of being taken out.

The adjustment control unit 156 of the ECU 96 accesses the management server 28 on the basis of the user confirmation, and acquires from the management server 28 adjustment information for the user that was confirmed. The adjustment information is information in order to adjust the electric moving body 10 for each of the users based on the user's preference and physique and the like, and by being transmitted at the time of user registration or at the time of application for usage of the electric moving body 10, the adjustment information is managed in the registrant DB 130 (refer to FIG. 7B). More specifically, the management server 28 constitutes an adjustment information storage unit that stores the adjustment information. For example, as the adjustment information of the electric bicycle 20A, there may be cited a height of the saddle 44, a gear speed, and the like. As the adjustment information of the electric scooter 20B, there may be cited a height of the handlebar and the like. As the adjustment information of the electric wheelchair 20C and the electric cart 20D, there may be cited a seat height, a mirror angle, and the like. By transmitting to the management server 28 the content (adjustment data) actually adjusted by the ECU 96 of the electric moving body 10 at a time when the user rides the electric moving body 10, the adjustment information may be configured to be stored in the management server 28.

The adjustment control unit 156 adjusts the electric moving body 10 based on the adjustment information. For example, in the case that the electric moving body 10 is an electric bicycle 20A, and further, the adjustment information includes the height of the saddle 44, by the adjustment control unit 156 driving the actuator 76 and thereby displacing the seat post 74, the height of the saddle 44 is adjusted in accordance with the adjustment information.

Further, based on the user confirmation, the detachment prevention mechanism control unit 158 of the ECU 96 operates the detachment prevention mechanism 122 and thereby locks the user battery 102. In accordance with this feature, the electric moving body 10 can prevent the user battery 102 from being stolen, for example, even in the case that the user temporarily moves away from the electric moving body 10 during usage thereof by the user.

On the other hand, in the case of a non-confirmed user who is determined by the authentication unit 150 not to be the user of the electric moving body 10, the vehicle lock control unit 152 and the electrical power supply control unit 154 continue the travel restricted state (locked and supply of the electrical power prohibited). Consequently, in the sharing system 12, a person who differs from the legitimate user is prevented from using the electric moving body 10. Further, in the case of the station lock mechanism 38 being placed in a state in which the electric moving body 10 is incapable of being taken out, the vehicle management unit 31 of the management device 30, by not receiving the user confirmation from the ECU 96 of the electric moving body 10, continues the state in which the electric moving body 10 is incapable of being taken out. Consequently, it is possible to prevent the electric moving body 10 from being taken out from the station 22.

The notification unit 160 of the ECU 96 transmits to the management server 28 a user non-confirmation (user authentication failure) due to the battery ID, and the management server 28 transmits the user non-confirmation to the information processing terminal 26 of the user. The user who has received such a notification becomes capable of smoothly recognizing that the user battery 102 connected to the electric moving body 10 differs from the one that was registered at the time of application.

Further, when the user is confirmed accompanying the installation of the user battery 102, the usage measurement unit 162 of the ECU 96 measures the usage period of the electric moving body 10 by the user. This is because, in the sharing system 12, there may be cases in which the station 22 where the electric moving body 10 is rented by the user may differ from the station 22 where the user returns the electric moving body 10, and on the side of the station 22, it is difficult to measure the usage period.

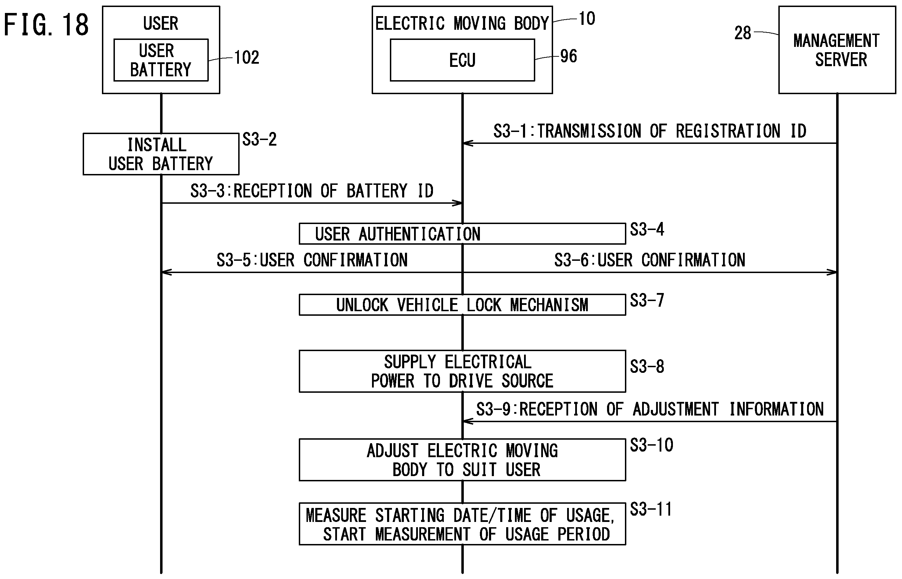

Hereinafter, with reference to FIG. 18, a description will be given concerning a process flow of the sharing system 12 at a time when the user rents the electric moving body 10 (step S3 in FIG. 5. The management server 28 serves to manage the battery ID, which is transmitted at the time when the application for usage is submitted by the user, in a state of being associated with the electric moving body 10 that the user plans to rent.

In addition, the management server 28 measures the date and time, and prior to the date and time when the user starting to use the electric moving body 10, transmits the registration ID to the electric moving body 10 (step S3-1). In accordance with this feature, the ECU 96 of the electric moving body 10 waits in a state where the registration ID has been received and stored in the memory.

The user carries the user battery 102, proceeds to the station 22 where the target electric moving body 10 is parked, and installs the user battery 102 in the second holder 112 of the electric moving body 10 (step S3-2). Accompanying the installation thereof, the information acquisition unit 124 of the electric moving body 10 automatically acquires the battery ID from the user battery 102, and the ECU 96 receives the battery ID (step S3-3).

Then, the authentication unit 150 of the ECU 96 carries out user authentication by referring to the battery ID that was acquired and the stored registration ID (step S3-4). In the user authentication, in the case that the battery ID and the registration ID coincide with each other, user confirmation is determined that the user has been confirmed as a user of the electric moving body 10. Consequently, the ECU 96 transmits information of the user confirmation to the control circuit of the user battery 102 (step S3-5), together with transmitting the information to the management device 30 and the management server 28 (step S3-6).

Further, the vehicle lock control unit 152 switches the vehicle lock mechanism 72 from a locked state to an unlocked state (step S3-7). Further, the electrical power supply control unit 154 of the ECU 96 enables the supply of electrical power from the main body battery 100 and the user battery 102 to the drive source 16 (step S3-8). Furthermore, the ECU 96 receives the adjustment information from the management server 28 that has transmitted the user confirmation (step S3-9). Based on the adjustment information, the adjustment control unit 156 of the ECU 96 adjusts the electric moving body 10 to suit the user (step S3-10).

Further, the usage measurement unit 162 of the ECU 96 measures the date and time when the user is initially confirmed and thereby determines the starting date and time of usage, together with starting the measurement of the usage period (step S3-11). As noted previously, by the user authentication being performed accompanying the installation of the user battery 102, and thereafter appropriately carrying out the control, it becomes possible for the user to comfortably use the electric moving body 10.

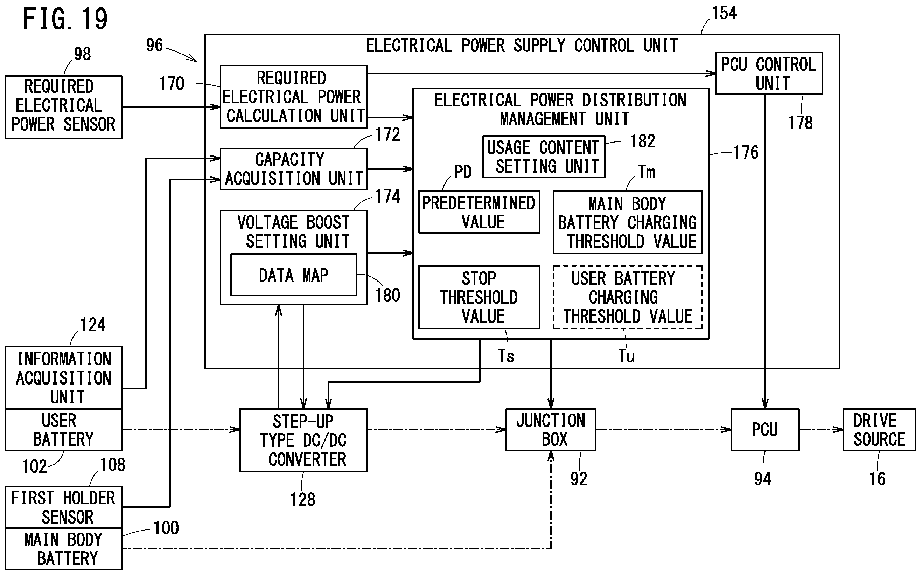

Next, returning to FIG. 5, a description will be given concerning a process when the user uses the electric moving body 10 (step S4). When the user uses the electric moving body 10, the electrical power supply control unit 154 of the ECU 96 appropriately distributes the electrical power of the main body battery 100 and the electrical power of the user battery 102. For this purpose, as shown in FIG. 19, within the electrical power supply control unit 154, functional blocks made up from a required electrical power calculation unit 170, a capacity acquisition unit 172, a voltage boost setting unit 174, an electrical power distribution management unit 176, and a PCU control unit 178 are constructed.

The required electrical power calculation unit 170 continuously calculates the required electrical power supplied to the drive source 16 based on a detection signal of the required electrical power sensor 98 (a torque sensor, a rotation sensor), and outputs the calculated required electrical power to the electrical power distribution management unit 176 and the PCU control unit 178. For example, the required electrical power calculation unit 170 estimates a traveling condition due to a reaction force of the pedals 60 applied to the crankshaft 58 as detected by the torque sensor, and a rotational speed detected by the rotation sensor, and calculates the required electrical power as an amount of assistance in accordance with the traveling condition.

Based on the detection signal of the first holder sensor 108, by a well-known calculation method, the capacity acquisition unit 172 calculates the residual battery level of the main body battery 100. Further, the capacity acquisition unit 172 calculates or acquires the residual battery level of the user battery 102 based on information (the residual battery capacity, the output voltage) from the information acquisition unit 124 of the second holder 112. The capacity acquisition unit 172 stores the acquired residual battery level of the main body battery 100 and the acquired residual battery level of the user battery 102 in a memory, and transmits the acquired residual battery levels to the electrical power distribution management unit 176.

The voltage boost setting unit 174 refers to a data map 180 that is possessed beforehand, and sets the boost amount of the step-up type DC/DC converter 128 between the input voltage input from the user battery 102 and the output voltage output to the drive source 16 (the PCU 94) . In the data map 180, the specifications (the output voltage, the output electrical power, etc.) of a plurality of types of the drive sources 16, and the specifications (the input voltage, the input electrical power, the capacity, etc.) of a plurality of types of the user batteries 102 are associated with each other by their boost amounts. The boost amount corresponds, for example, a switching time of a switching circuit (not shown) of the step-up type DC/DC converter 128. Moreover, the user battery 102 may be equipped with the voltage conversion unit 126 (DC/DC converter) and a non-illustrated control circuit having the voltage boost setting unit 174, and may be configured in a manner so that the output electrical power boosted in the user battery 102 is capable of being supplied to the exterior.

When the user battery 102 is retained in the second holder 112, the voltage boost setting unit 174 acquires information (the input voltage, the input electrical power, the capacity, etc.) of the user battery 102. The voltage boost setting unit 174 recognizes the specifications of the drive source 16 in advance, extracts an appropriate boost amount from the data map 180 based on the acquired information of the user battery 102 and the specifications of the drive source 16, and transmits the extracted boost amount to the step-up type DC/DC converter 128. By switching the switching circuit based on the transmitted boost amount, a switching control unit (not shown) of the step-up type DC/DC converter 128 boosts the voltage of the user battery 102 to the set boost amount.

The data map 180, by including the specifications of a plurality of types of the drive sources 16, makes it possible to easily install the step-up type DC/DC converter 128 on various types of the electric moving bodies 10. More specifically, by referring to the data map 180, the ECU 96 is capable of boosting the voltage in the step-up type DC/DC converter 128 in accordance with the drive source 16 of the electric moving body 10 serving as the object to which the voltage is applied. Consequently, the workload in setting the boost amount for each of the drive sources 16 of the electric moving bodies 10 is reduced.

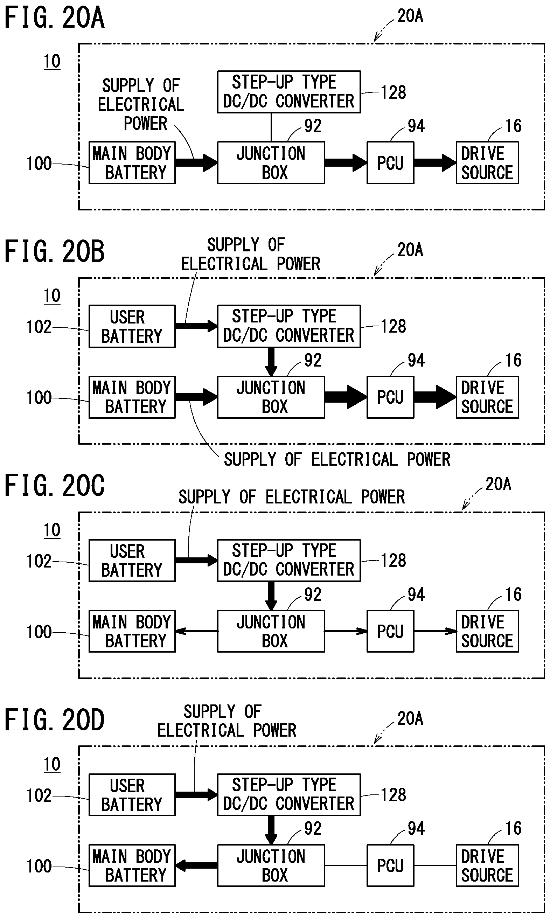

Upon receiving the requested electrical power, the residual battery level of the main body battery 100, the residual battery level of the user battery 102, and the boost amount of the user battery 102, the electrical power distribution management unit 176 carries out the electrical power supply control of the electrical power of the main body battery 100 and the electrical power of the user battery 102. For example, the electrical power distribution management unit 176 controls the operation of the junction box 92 such that the content of the control becomes as shown in FIG. 20A to FIG. 20D, and switches the electrical power pathway of the main body battery 100 and the electrical power pathway of the user battery 102.

FIG. 20A shows the electrical power supply control in the case that the user battery 102 is not connected. In this case, by appropriately switching the interior of the junction box 92, the electrical power distribution management unit 176 supplies the electrical power of the main body battery 100 sequentially in order, to the junction box 92, the PCU 94, and the drive source 16. Consequently, the drive source 16 is driven solely by the electrical power of the main body battery 100.

On the other hand, FIG. 20B to FIG. 20D show the electrical power supply control in the case that the user battery 102 is connected. For example, as shown in FIG. 20B, in the case (of a requirement for a high output) that the required electrical power (refer to FIG. 19) is greater than the predetermined value PD, the electrical power distribution management unit 176 combines the electrical power of the main body battery 100 and the electrical power of the user battery 102 inside the junction box 92, and supplies the combined electrical power to the drive source 16. Stated otherwise, the electrical power distribution management unit 176 simultaneously supplies the electrical power of the main body battery 100 and the electrical power of the user battery 102 to the drive source 16.

Further, as shown in FIG. 20C, in the case that the required electrical power is greater than zero and less than or equal to the threshold value PD (in the case of a low electrical power requirement), the electrical power distribution management unit 176 stops the supply of electrical power from the main body battery 100. Consequently, the electrical power of the user battery 102 is supplied sequentially in order to the step-up type DC/DC converter 128, the junction box 92, the PCU 94, and the drive source 16. Accordingly, the drive source 16 is driven solely by the electrical power of the user battery 102.

Moreover, in the case for a request of low output, the electrical power distribution management unit 176 preferably distributes the electrical power of the user battery 102 appropriately in accordance with the residual battery level of the main body battery 100, the residual battery level of the user battery 102, and the required electrical power. For example, in the case that the required electrical power falls below a main body battery charging threshold value Tm (refer to FIG. 19), the electrical power distribution management unit 176 supplies the electrical power from the user battery 102 to the main body battery 100 via the junction box 92 (such a pattern is shown as an example in FIG. 20C). In this case, the main body battery charging threshold value Tm may be set to a value that is less than or equal to the aforementioned predetermined value PD. Consequently, the electric moving body 10 is capable of charging the main body battery 100 at a time when the output of the drive source 16 is low.

Furthermore, as shown in FIG. 20D, in the case that the required electrical power is zero (in other words, less than or equal to the main body battery charging threshold value Tm), the electrical power distribution management unit 176 determines that the vehicle body 14 is in a stopped state, and stops the supply of electrical power from the user battery 102 to the drive source 16. In addition, the electrical power distribution management unit 176 carries out charging of the main body battery 100, by supplying the electrical power from the user battery 102 sequentially in this order to the step-up type DC/DC converter 128, the junction box 92, and the main body battery 100. Moreover, in the patterns shown in FIG. 20C and FIG. 20D, the electrical power distribution management unit 176 may acquire the residual battery level of the main body battery 100, and may stop the supply of electrical power from the user battery 102 to the main body battery 100 in the case that the main body battery 100 is near to being fully charged (for example, the SOC thereof is greater than or equal to 90%). At this time, the electrical power distribution management unit 176 reduces the output value of the electrical power of the user battery 102. Consequently, excessive charging of the main body battery 100 can be suppressed, and the electrical power consumption of the user battery 102 can be suppressed.

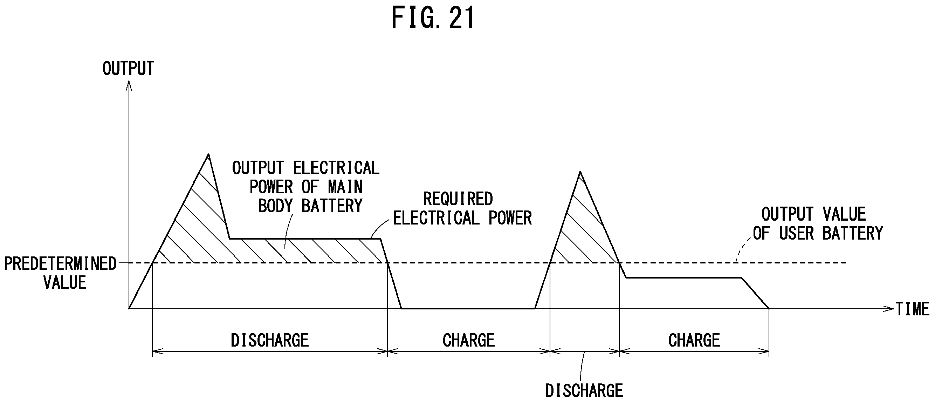

Further, in the above-described content of the control shown in FIG. 20B to FIG. 20D, the electrical power distribution management unit 176 preferably controls the junction box 92 and the step-up type DC/DC converter 128, in a manner so as to maintain the electrical power output from the user battery 102 at a constant output value. As shown in FIG. 21, the electrical power distribution management unit 176, for example, controls so as to make the predetermined value PD and the output value of the user battery 102 coincide with each other, and maintains the output value constant even if the required electrical power changes over time. Accordingly, the main body battery 100 is the only battery 18 whose output value (or input value) changes according to the required electrical power.

Specifically, in the case that the required electrical power is greater than the threshold value PD (output value), the electrical power distribution management unit 176 changes the electrical power of the main body battery 100 in accordance with the required electrical power without changing the output value of the user battery 102. Further, in the case that the required electrical power is less than or equal to the predetermined value PD (output value), by not changing the output value of the user battery 102, the electrical power distribution management unit 176 directs the electrical power to both the drive source 16 and the main body battery 100. Stated otherwise, the electrical power distribution management unit 176 supplies from the user battery 102 to the main body battery 100 the difference in the electrical power obtained by subtracting the required electrical power from the output value.

More preferably, the output value of the user battery 102 is appropriately set by the electrical power distribution management unit 176 in accordance with the residual battery level of the main body battery 100. For example, a situation may be cited in which, in the case that the residual battery level of the main body battery 100 is high, the output value of the user battery 102 is set to be small, whereas in the case that the residual battery level of the main body battery 100 is low, the output value of the user battery 102 is set to be high.

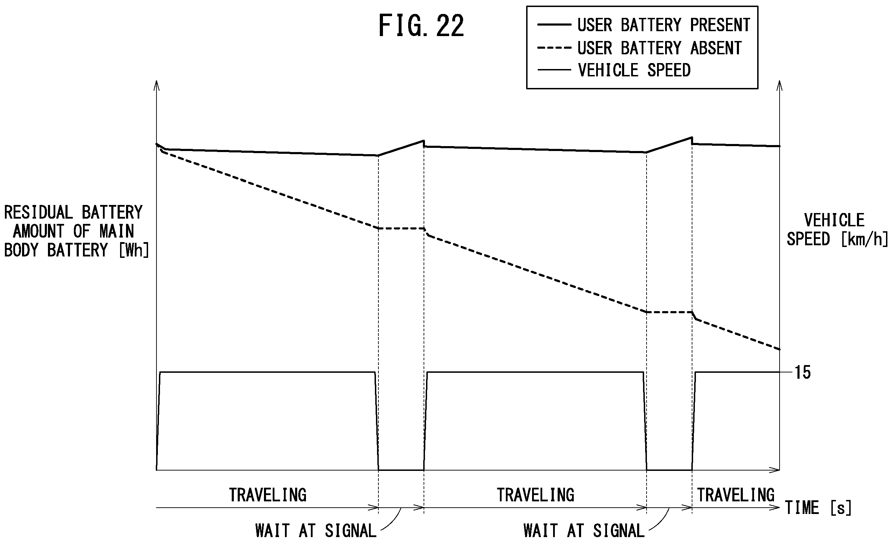

In the foregoing manner, by the electric moving body 10 preferentially supplying the electrical power from the user battery 102, a decrease in the residual battery level of the main body battery 100 can be sufficiently suppressed. For example, a description will be given with reference to FIG. 22 concerning a change over time in the residual battery level of the main body battery 100 for a case in which the user battery 102 that outputs a constant output value of 30 W is used, and a change over time in the residual battery level of the main body battery 100 for a case in which the user battery 102 is not used. Moreover, in FIG. 22, a pattern is shown as an example in which the electric bicycle 20A travels 3 km on a flat road at a vehicle speed of 15 km/h, and during traveling, waits for traffic signals twice along the way.

In the case that the user battery 102 is not used, while the electric bicycle 20A is traveling, the residual battery level of the main body battery 100 decreases at a substantially constant rate of decrease. In addition, when the electric bicycle 20A is stopped, the residual battery level of the main body battery 100 remains unchanged without decreasing. Accordingly, a state is brought about in which the residual battery level of the main body battery 100 is greatly reduced after having traveled 3 km.

On the other hand, in the case that the user battery 102 having an output value of 30 W is used, during traveling of the electric vehicle, the residual battery level of the main body battery 100 is substantially constant and decreases at a slower rate than in the case when the user battery 102 is not used. Further, when the electric bicycle 20A is stopped, by supplying power from the user battery 102 to the main body battery 100, the residual battery level of the main body battery 100 increases. As a result, even after having traveled 3 km, the residual battery level of the main body battery 100 becomes placed in a state in which it is almost not decreased. Stated otherwise, by applying the user battery 102 to the electric moving body 10, it is possible to sufficiently suppress any chance that the residual battery level of the main body battery 100 may significantly decrease.

Moreover, the electrical power distribution management unit 176 may set the content of the control in accordance with the residual battery level of the user battery 102. For example, as shown in FIG. 19, the electrical power distribution management unit 176 includes a stop threshold value Ts corresponding to the residual battery level of the user battery 102. In the case that the residual battery level of the user battery 102 is greater than the stop threshold value Ts, the electrical power distribution management unit 176 supplies the electrical power from the user battery 102 to the drive source 16 or to the main body battery 100. On the other hand, in the case that the residual battery level of the user battery 102 is less than or equal to the stop threshold value Ts, the electrical power distribution management unit 176 stops the supply of electrical power from the user battery 102. As shown in FIG. 20A, in the case that the supply of electrical power from the user battery 102 is stopped, only the electrical power of the main body battery 100 is supplied to the drive source 16. Consequently, a situation is avoided in which the battery of the user battery 102 is used more than necessary.

Further, the electrical power distribution management unit 176 preferably includes a usage content setting unit 182 that is capable of enabling the amount of battery usage of the user battery 102 to be set by the user. For example, the usage content setting unit 182 can carry out communication of information (the application 140 of the sharing system 12) with the smart phone 37 via the communication module, and can change the stop threshold value Ts based on an instruction from the smart phone 37. The usage content setting unit 182, in addition to the stop threshold value Ts, may be configured to be capable of setting the output value and the like of the user battery 102.

Returning to FIG. 19, the PCU control unit 178 of the ECU 96 controls the PCU 94 based on the required electrical power received from the required electrical power calculation unit 170. By the above-described electrical power distribution management unit 176, the required electrical power can be supplied to the PCU 94 in the junction box 92 on the upstream side of the PCU 94. Therefore, in accordance with a range of the required electrical power from a high output to a low output, the PCU control unit 178 can appropriately convert the DC electrical power into AC electrical power in the PCU 94, and output the AC electrical power to the drive source 16.

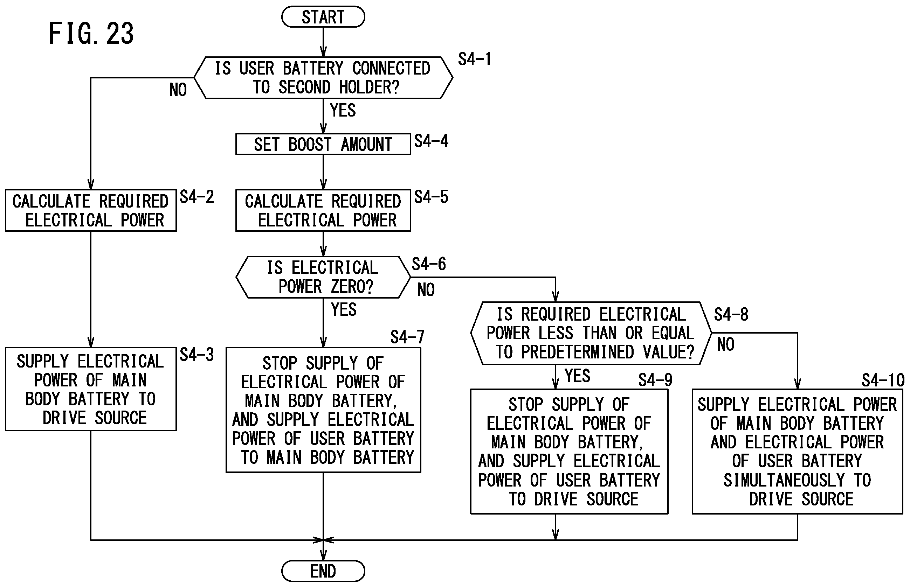

Hereinafter, with reference to FIG. 23, a description will be given concerning a process flow of the ECU 96 at a time when the electric moving body 10 is used by the user (step S4 of FIG. 5). The ECU 96 of the electric moving body 10 controls the driving of the drive source 16 when activated based on an ON operation of the electrical power source by the user.

After being started, the electrical power supply control unit 154 of the ECU 96 determines whether or not the user battery 102 is connected to the second holder 112 (step S4-1). For example, the electrical power supply control unit 154 determines the connection of the user battery 102 based on a signal transmitted from the information acquisition unit 124. In addition, in the case that the user battery 102 is not connected (step S4-1: NO), the process proceeds to step S4-2, and in the case that the user battery 102 is connected (step S4-1: YES), the process proceeds to step S4-4.

In step S4-2, the electrical power supply control unit 154 calculates the required electrical power based on the detection signal of the required electrical power sensor 98. Furthermore, the electrical power supply control unit 154 controls the junction box 92 and the PCU 94, and thereby supplies the electrical power of the main body battery 100 to the drive source 16 (step S4-3). Consequently, the electric moving body 10 is capable of traveling using the electrical power of the main body battery 100.

On the other hand, in step S4-4, the electrical power supply control unit 154 acquires the input electrical voltage of the user battery 102 from the information acquisition unit 124 of the second holder 112, and by referring to the data map 180, sets the boost amount of the step-up type DC/DC converter 128 based on the input voltage.

Thereafter, the electrical power supply control unit 154 calculates the required electrical power based on the detection signal of the required electrical power sensor 98 (step S4-5). Furthermore, the electrical power supply control unit 154 determines the content of the control based on the calculated required electrical power. For example, the electrical power supply control unit 154 determines whether or not the required electrical power is zero (step S4-6). In the case that the required electrical power is zero (step S4-6: YES), the required electrical power is certainly lower than the main body battery charging threshold value Tm. Therefore, the electrical power supply control unit 154 switches the junction box 92 and thereby stops the supply of electrical power of the main body battery 100, together with supplying the electrical power from the user battery 102 to the main body battery 100 (step S4-7). On the other hand, in the case that the required electrical power is greater than or equal to zero (step S4-6: NO), the process proceeds to step S4-8.

In step S4-8, the electrical power supply control unit 154 determines whether or not the required electrical power is less than or equal to the predetermined value PD (a value dividing the high output and the low output). Then, in the case that the required electrical power is less than or equal to the predetermined value PD (step S4-8: YES), the supply of electrical power from the main body battery 100 is stopped, and the electrical power from the user battery 102 is supplied to the drive source 16 (step S4-9). At this time, if the required electrical power is lower than the main body battery charging threshold value Tm, the electrical power supply control unit 154 may supply a surplus amount of the electrical power of the user battery 102 that is not supplied to the drive source 16 to the main body battery 100, and thereby charge the main body battery 100 (refer also to FIG. 20C).

In the case that the required electrical power is greater than the predetermined value PD (step S4-8: NO), the junction box 92 is switched, and the electrical power of the main body battery 100 and the electrical power of the user battery 102 are simultaneously supplied to the drive source 16 (step S4-10). In this manner, using the electrical power of the user battery 102, the electric moving body 10 is capable of traveling while suppressing the amount of electrical power used by the main body battery 100.

Next, a description will be given concerning information provided to the electric moving body 10 and the user at a time when the electric moving body 10 is used by the user in the sharing system 12. Specifically, in relation to the electric moving body 10 during usage thereof, the sharing system 12 performs a number of processes by monitoring the residual battery level of the main body battery 100 and the residual battery level of the user battery 102.

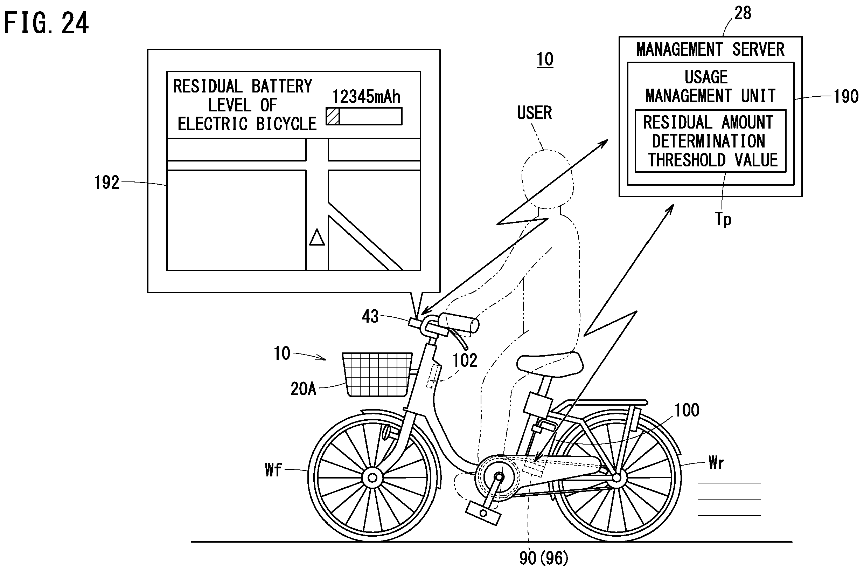

For this purpose, as shown in FIG. 24, a usage management unit 190 is formed in the interior of the management server 28. By carrying out communication with the ECU 96 of the electric moving body 10 used by the user, the usage management unit 190 acquires the current position of the electric moving body 10, the residual battery level of the main body battery 100, and the residual battery level of the user battery 102. Moreover, although in FIG. 24, a state is illustrated in which communication is carried out while the electric moving body 10 is traveling, the ECU 96 may be configured in a manner so as to carry out communication only at a time when the movement of the vehicle body 14 is stopped and the state of communication therewith is stable. By calculating the total value of the residual battery level of the main body battery 100 and the residual battery level of the user battery 102, the usage management unit 190 monitors the residual battery level of the electric moving body 10 as a whole.

The sharing system 12 may transmit the total value calculated by the usage management unit 190 to the touch panel 43 provided on the electric moving body 10. By displaying the transmitted total value, the touch panel 43 can allow the user to recognize the residual battery level of the batteries 18 of the electric moving body 10 as a whole. Further, the touch panel 43 preferably is equipped with a function of measuring the current position, and a navigation function, and is configured in a manner so as to display map information 192, the user's own vehicle X, and a movement route. The usage management unit 190 may calculate the movement route based on the usage conditions (the return location, the destination) of the application acceptance information 144 of the user, and may provide the movement route to the touch panel 43. Moreover, it should be noted that the usage management unit 190 may be provided within the touch panel 43.

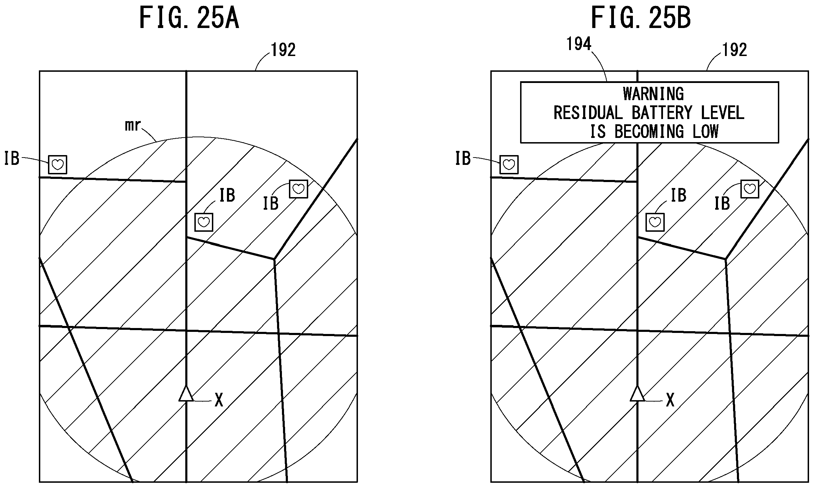

As shown in FIG. 25A, in the upper layer of the map information 192, the touch panel 43 may display the movement capable range mr of the electric moving body 10 that is estimated from the acquired total value. In accordance with this feature, the user can easily recognize the movement capable range mr based on the residual battery level of the electric moving body 10 as a whole. Moreover, the touch panel 43 may be configured so as to respectively display each of the movement capable range mr of the residual battery level of the main body battery 100, and the movement capable range mr of the residual battery level of the user battery 102.

Further, as shown in FIG. 24, the usage management unit 190 includes a residual amount determination threshold value Tp for the purpose of monitoring a decrease in the residual battery level of the batteries 18. For example, the usage management unit 190 compares the total value (or alternatively, the residual battery level of the main body battery 100 alone, or the residual battery level of the user battery 102 alone) with the residual amount determination threshold value Tp, and determines whether or not the total value is equal to or less than the residual amount determination threshold value Tp. Then, in the case that the total value is less than or equal to the residual amount determination threshold value Tp, residual level low information to the effect that the residual battery level of the electric moving body 10 is low is transmitted to the touch panel 43 (or emailed to the user's smart phone 37 or the like). For example, as shown in FIG. 25B, on the basis of receiving the residual level low information, the touch panel 43 displays a residual level low notification 194.

Furthermore, based on the current position of the electric moving body 10 during usage thereof, the usage management unit 190 may refer to the battery station DB 138, and may provide the information IB of battery stations 34 in close proximity to the current position of the electric moving body 10 (refer also to FIG. 25A).

Returning to FIG. 24, the usage management unit 190 may refer to the shared battery DB 134, and may provide information of shared batteries 32 having a sufficient residual battery level that are capable of being rented. At this time, it is preferable for the usage management unit 190 to provide such information by calculating the amount of electrical power usage based on the usage conditions of the application acceptance information 144 of the user, and extract only a shared battery 32 having a residual battery level in excess of the amount of electrical power usage. Consequently, when the user who is using the electric moving body 10 temporarily rents the shared battery 32 displayed on the touch panel 43, the user can comfortably make use of the electric moving body 10 by the electrical power of the shared battery 32. Moreover, when the user rents the shared battery 32, the management server 28 transmits the battery ID of the shared battery 32 to the authentication unit 150 as the registration ID used for user authentication, whereby the user authentication can be executed in a stable manner.

At the time when the aforementioned residual amount low information is transmitted, it is preferable for the usage management unit 190 to also transmit information of the shared batteries 32 that are capable of being rented or battery stations 34 of such batteries. In accordance with this feature, by the touch panel 43 displaying the locations of the shared batteries 32 together with the residual level low notification 194, on the basis of such information, an action such as going to rent a shared battery 32 can be adopted.

The usage management unit 190 may compare the residual battery level of the electric moving body 10 with the amount of battery usage based on the usage conditions of the application acceptance information 144, and change an assist mode of the electric moving body 10. The assist mode is set in a plurality of stages such as a power mode in which the electrical power of the battery 18 is used at full power during traveling, a normal mode in which the electrical power of the battery 18 is used in accordance with necessary conditions during traveling, and an electrical power saving mode to suppress the electrical power consumption of the battery 18. As an example, in the electrical power saving mode, the supply of electrical power from the battery 18 is stopped on a flat road or the like, and the supply of electrical power from the battery 18 is performed only when a gradient (torque) of the route is large.

For example, the usage management unit 190 calculates the movement route or the movement distance of the electric moving body 10 based on the usage conditions in the application acceptance information 144, and by referring to the map information (not shown) retained therein, recognizes the route gradients included in the movement route. Furthermore, the usage management unit 190 calculates the amount of battery usage in consideration of the movement route, the movement distance, the route gradients, and the like. In addition, the usage management unit 190 transmits to the ECU 96 an instruction to the effect of traveling in the power mode or the normal mode, in the case that the residual battery level of the electric moving body 10 is larger than the calculated amount of battery usage. Consequently, the electrical power supply control unit 154 of the ECU 96 performs a control to supply sufficient electrical power from the batteries 18 to the drive source 16 in accordance with the required electrical power, and causes any discomfort of the user of the electric moving body 10 (the chance of being made to feel an insufficient assistance) to be reduced.

On the other hand, in the case that the residual battery level of the electric moving body 10 is less than (or approximately the same as) the amount of battery usage, an instruction to travel in the electrical power saving mode is transmitted to the ECU 96. Then, the electrical power supply control unit 154 of the ECU 96 performs a control to suppress the electrical power consumption of the batteries 18 based on the electrical power saving mode that was instructed. Consequently, when the user returns the electric moving body 10, it is possible to avoid a situation in which the residual electrical power level of the battery 18 becomes zero. Depending on the remaining residual battery level, the ECU 96 can carry out the necessary communication of information with the management device 30 or the management server 28.

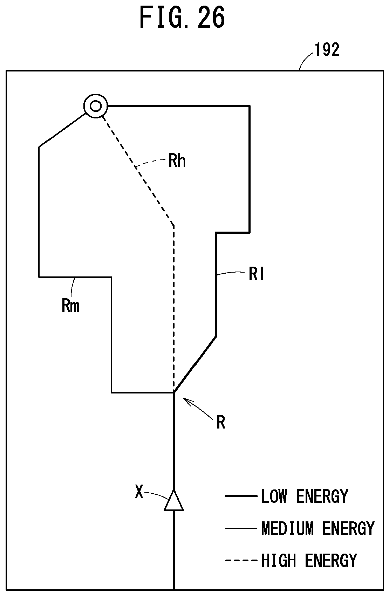

Alternatively, as shown in FIG. 26, the usage management unit 190 may calculate a plurality of movement routes R from the usage conditions together with the amount of the battery usage for each of the movement routes R, and may provide route information in which the amount of battery usage is small from among the plurality of routes in accordance with the residual battery power of the electric moving body 10. By displaying such route information on the map information 192 on the touch panel 43, the user having recognized the route information can follow along a movement route R in which the amount of electrical power consumption is suppressed. Moreover, as shown in FIG. 26, an example is illustrated in which a plurality of the movement routes R exist, such as a detour but low-energy route Rl, a shortest distance by high-energy route Rh, and an alternative route (a medium-energy route Rm). The usage management unit 190 (or the ECU 96) may carry out a control in which the assist mode is set to the normal mode in the case that the user travels along the low-energy route Rl, and the assist mode is set to the power-saving mode in the case that the user travels along the high-energy route Rh.

Returning to FIG. 5, lastly, a description will be given of a process when the user returns the electric moving body 10 (step S5) and a process of paying the fee (step S6). The user who has used the electric moving body 10 returns the electric moving body 10 to the return location (the station 22) specified at the time of the application for usage. Moreover, it should be noted that the user may return the electric moving body 10 to a station 22 that differs from the return location specified in the application acceptance information 144.

Returning of the electric moving body 10 is completed by stopping the electric moving body 10 against the station lock mechanism 38 of the station 22, together with taking out the user battery 102 from the second holder 112. As noted previously, since the ECU 96 executes the user authentication (user confirmation) by way of the battery ID, the user confirmation is canceled when the user battery 102 is disconnected. The ECU 96 may determine the ending date and time of usage based on the parking at the station 22, and the time at which the user confirmation is canceled.

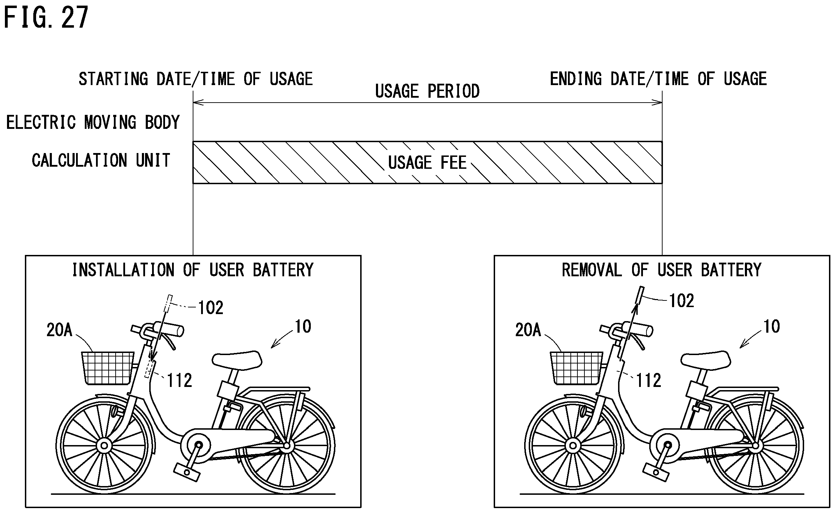

More specifically, as shown in FIG. 27, the usage measurement unit 162 of the ECU 96 recognizes the starting date and time of usage of the electric moving body 10 based on the user confirmation, and measures the usage period from that point in time. Further, the usage measurement unit 162 recognizes the ending date and time of usage of the electric moving body 10 based on the removal of the user battery 102 from the second holder 112 (cancellation of the user confirmation), and at that point in time, terminates the measurement of the usage period. Consequently, the usage measurement unit 162 is capable of easily calculating the usage period of the electric moving body 10 of the user, and transmitting the calculated usage period to the management server 28 and the management device 30.

A calculation unit 196 that calculates the usage fee for the electric moving body 10 on the basis of the usage period measured by the usage measurement unit 162 is provided in the management server 28 (refer to FIG. 17). The calculation unit 196 of the management server 28 calculates the usage fee in accordance with the usage period of the user that was received, and charges the usage fee to the user. Moreover, the sharing system 12 may be configured in a manner so as to be capable of using points in relation to other services or the like, and the calculation unit 196 may calculate such points in accordance with the usage period. Further, the sharing system 12 may have a configuration in which the management device 30 is equipped with the calculation unit 196, and the usage fee for the electric moving body 10 is settled in the management device 30.

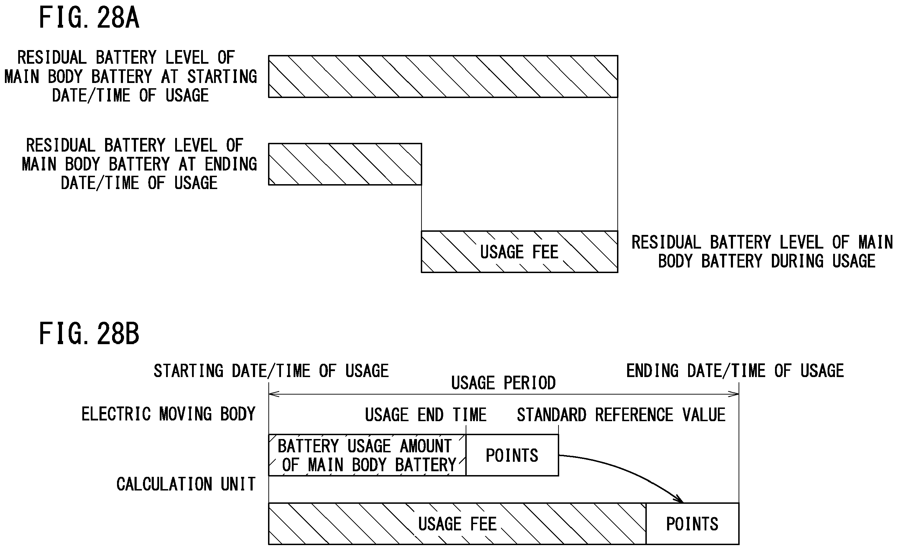

Alternatively, as shown in FIG. 28A, the sharing system 12 may be configured in a manner so as to calculate the usage fee based on the amount of battery usage of the main body battery 100. For example, on the basis of the user confirmation, the usage measurement unit 162 recognizes the start of usage of the electric moving body 10, and at that point in time, measures and stores the residual battery level of the main body battery 100. For example, based on the user battery 102 having been taken out from the second holder 112, the usage measurement unit 162 recognizes the end of usage of the electric moving body 10, and at that point in time, measures and stores the residual battery level of the main body battery 100. In addition, the usage measurement unit 162 calculates the difference between the residual battery level of the main body battery 100 at the time of the start of usage and the residual battery level of the main body battery 100 at the time of the end of usage. Consequently, in accordance with the calculated difference in the residual battery level of the main body battery 100, the management server 28 and the calculation unit 196 of the management device 30 can calculate a fee and charge the fee to the user.

Moreover, in the case that the amount of battery usage of the main body battery 100 is reflected in the usage fee, a method of calculation may be adopted in which a basic usage fee is calculated on the basis of the usage period, the points are calculated in accordance with the amount of battery usage of the main body battery 100, and the points are subtracted from the usage fee. For example, as shown in FIG. 28B, the calculation unit 196 includes a standard reference value of the amount of battery usage corresponding to the amount of battery usage of the main body battery 100, and subtracts the amount of battery usage from the standard reference value. In accordance with this feature, in the case that the amount of battery usage of the main body battery 100 is small, the calculation unit 196 is capable of calculating a high point and can significantly discount the usage fee. Further, in the case that the amount of battery usage of the main body battery 100 is large, the calculation unit 196 is capable of calculating a low point, and the usage fee can be discounted less or an extra charge can be added to the usage fee.

Further, alternatively, the sharing system 12 may be configured in a manner so as to measure the amount of electrical power usage of the user battery 102 during the period of usage of the electric moving body 10 and reflect such an amount in the usage fee. For example, the usage measurement unit 162 calculates a difference between the residual battery level of the user battery 102 at a starting point in time of usage of the electric moving body 10 based on the user confirmation, and the residual battery level of the user battery 102 at an ending point in time of usage of the electric moving body 10 based on the removal of the user battery 102. In accordance with this feature, the calculation unit 196, for example, calculates a lower usage fee in the case that the amount of battery usage of the user battery 102 is high, while on the other hand, calculates a higher usage fee in the case that the amount of battery usage of the user battery 102 is low.

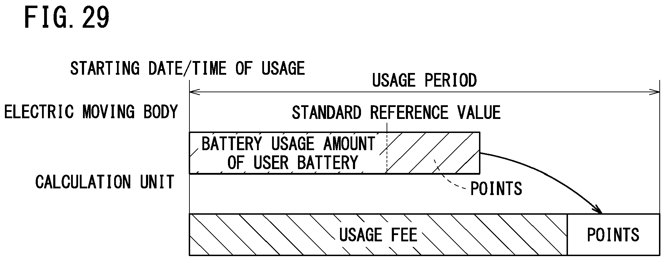

Moreover, in the case that the amount of battery usage of the user battery 102 is reflected in the usage fee as well, a method of calculation may be adopted in which a basic usage fee is calculated on the basis of the usage period, the points are calculated in accordance with the amount of battery usage of the user battery 102, and the points are subtracted from the usage fee. For example, as shown in FIG. 29, the calculation unit 196 calculates a high point in the case that the amount of battery usage of the user battery 102 is high, while on the other hand, calculates a low point in the case that the amount of battery usage of the user battery 102 is low. In accordance with this feature, in the case that the amount of battery usage of the user battery 102 is high, the calculation unit 196 is capable of calculating a high point and can significantly discount the usage fee. Further, in the case that the amount of battery usage of the user battery 102 is small, the calculation unit 196 is capable of calculating a low point, and the usage fee can be discounted less or an extra charge can be added to the usage fee.

Alternatively, the calculation unit 196 may of course calculate the usage fee by comprehensively converting the period of usage, the amount of electrical power usage of the main body battery 100, and the amount of electrical power usage of the user battery 102.

In the case of a financial institution (a credit card, or the like) being registered as user information, payment of the usage fee for the electric moving body 10 by the user is collected from such a financial institution. Moreover, the sharing system 12 may be configured in a manner so that the user directly pays the usage fee for the electric moving body 10 with respect to the management device 30.

The present invention is not limited to the above-described embodiments, and various modifications are possible in line with the essence and gist of the invention. For example, the sharing system 12 may include various forms of temporary usage, such as a long-term lease of the electric moving body 10 to the user, and a short-term rental of the electric moving body 10 by the user. Further, the sharing system 12 may be configured in a manner so that one of the electric moving bodies 10 is shared by a plurality of users. Further, for example, the electric moving body 10 may not only be applied to the sharing system 12, but may also be one that is possessed by an individual person. The electric moving body 10 may be configured in a manner so as to apply only the user battery 102 as the one or more of the batteries 18.

An electric moving body 10 apart from the electric bicycle 20A may also include at an appropriate position the second holder 112 that fixes the user battery 102 in place. For example, as shown in FIG. 1, the electric scooter 20B may have a configuration in which the second holder 112 is provided in a bulging portion 204 that connects a handle shaft 200 and a floor panel portion 202. Further, the electric wheelchair 20C and the electric cart 20D can be configured so as to be equipped with the second holder 112 in an armrest portion 206 provided adjacent to a seat on which the user sits.

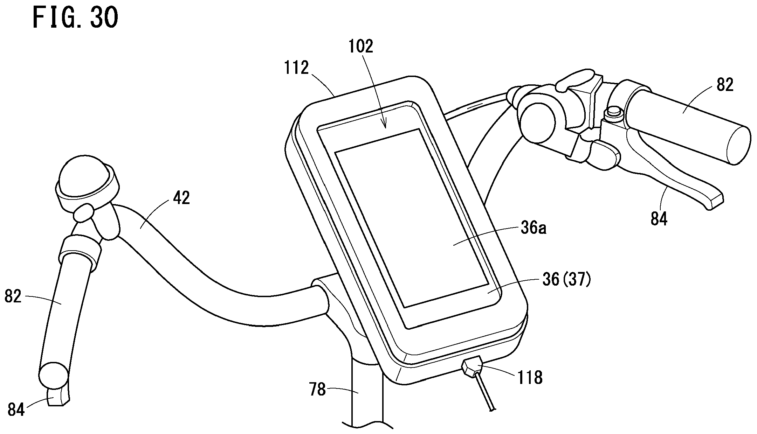

As in a first exemplary modification shown in FIG. 30, the electric moving body 10 may be configured to be equipped in the handlebar 42 (a frame in close proximity to the steering shaft 78) with the second holder 112 that retains the user battery 102. For example, in the case that the user battery 102 is the battery 18 of the smart phone 37 itself, the second holder 112 fixes the smart phone 37 in a manner so that the input/output unit 36a of the smart phone 37 faces toward the user who is seated on the saddle 44. Consequently, in the same manner as the touch panel 43 described above, while supplying electrical power to the drive source 16 and the main body battery 100, the user battery 102 (the smart phone 37) is capable of displaying various information at a time when the electric moving body 10 is in use.

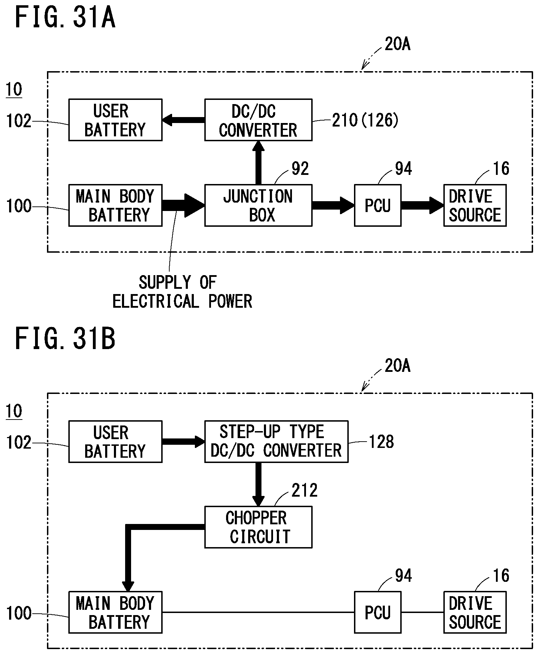

As in a second exemplary modification shown in FIG. 31A, the electric moving body 10 may be configured to charge the user battery 102 with the electrical power of the main body battery 100 in the case that the electrical power of the user battery 102 is low. For example, the ECU 96 includes a user battery charging threshold value Tu (charging threshold value: refer to the dotted line in FIG. 19) within the electrical power distribution management unit 176, and when the residual battery level of the user battery 102 becomes less than or equal to the user battery charging threshold value Tu, the ECU 96 supplies the electrical power of the main body battery 100 to the user battery 102. The user battery charging threshold value Tu is preferably set to be smaller than the stop threshold value Ts, or a configuration may be provided in which the user battery charging threshold value Tu can be set by the user via the usage content setting unit 182.

Via a step-down type DC/DC converter 210 (the voltage conversion unit 126), the electrical power of the main body battery 100 is converted into a voltage that is suitable for charging the user battery 102. Further, even in the case it is determined that the user battery 102 is charged, the electrical power distribution management unit 176 monitors the required electrical power supplied to the drive source 16, and when the required electrical power is low (when stopped or at a time of low output), the electrical power distribution management unit 176 directs the electrical power from the main body battery 100 toward the user battery 102. Consequently, the electric moving body 10 is capable of carrying out charging of the user battery 102 while preventing an insufficient supply of electrical power to the drive source 16.

As in a third exemplary modification shown in FIG. 31B, the electric moving body 10 may be configured to make use of the electrical power from the user battery 102 only for charging the main body battery 100, and not to supply electrical power to the drive source 16. For example, the step-up type DC/DC converter 128 and a chopper circuit 212 are disposed between the main body battery 100 and the user battery 102. During traveling of the electric moving body 10, the ECU 96 interrupts the supply of electrical power of the user battery 102 by the chopper circuit 212. In addition, when it is recognized that the electric moving body 10 is in a state in which movement thereof is stopped (the required electrical power is zero) and the supply of electrical power from the main body battery 100 to the drive source 16 is stopped, the ECU 96 releases the interruption of the chopper circuit 212, and supplies the electrical power from the user battery 102 to the main body battery 100. In this manner, even if the user battery 102 only carries out charging of the main body battery 100, a decrease in the residual battery level of the main body battery 100 can be suppressed.

Further, by the user not selecting the type of the electric moving body 10 in the application for usage by the user, the sharing system 12 extracts an appropriate type of electric moving body 10 on the basis of the information of the user battery 102 in the management server 28, and the extracted type may be proposed to the user. For example, the management server 28 extracts the electric scooter 20B with a high consumption of electric power in the case that the residual battery level of the user battery 102 is high, and extracts the electric bicycle 20A with a low consumption of electric power in the case that the residual battery level of the user battery 102 is low. Consequently, the user becomes capable of using an appropriate electric moving body 10 in accordance with the user battery 102.

Further, the authentication unit 150 that performs user authentication is not limited to a configuration of being provided in the electric moving body 10, and may be provided in the management device 30 of each of the stations 22 or in the management server 28. For example, in the case that the authentication unit 150 is provided in the management server 28, the ECU 96 of the electric moving body 10 acquires the battery ID from the user battery 102 that is installed in the second holder 112, and transmits the battery ID to the management server 28. Consequently, the management server 28 is capable of comparing the transmitted battery ID with the registration ID, and can determine whether or not the user is a legitimate user who has applied for usage of the electric moving body 10. Similarly, without being limited to a configuration in which the usage measurement unit 162 of the ECU 96 is also provided in the electric moving body 10, the usage measurement unit 162 may be provided in the management device 30 of each of the stations 22 or in the management server 28.

The sharing system 12 may enable the user to use the electric moving body 10 without performing an application for usage, by the user carrying the user battery 102 and proceeding to the station 22, and connecting the user battery 102 to the electric moving body 10 while on standby. In this case, the ECU 96 of the electric moving body 10 acquires the battery ID of the user battery 102 accompanying the user battery 102 being connected, together with transmitting the battery ID to the management server 28. By authenticating (identifying) the user on the basis of the battery ID, the management server 28 can perform permission for usage, management of a fee, and the like.

Hereinafter, a description will be given concerning the technical concepts and advantageous effects that can be grasped from the above-described embodiment.

One aspect of the present invention is characterized by the sharing system 12 in which the plurality of users share the electric moving body 10, the electric moving body 10 including the holder (second holder 112) configured to detachably retain the user battery 102 possessed by one of the users who has rented the electric moving body 10, and the sharing system includes the authentication unit 150 configured to authenticate the one of the users that uses the electric moving body 10, by acquiring battery identification information from the user battery 102 installed in the holder, and determining whether the acquired battery identification information coincides with registration identification information that is registered beforehand.

In accordance with the foregoing, the sharing system 12 determines, with the authentication unit 150, whether the battery identification information of the user battery 102 coincides with registration identification information, and therefore can perform user authentication easily in a short period of time when the user battery 102 is installed. Accordingly, each of the users of the sharing system 12 can use the electric moving body 10 comfortably, by significantly reducing workload on the user in the user authentication (trouble of user certification or the like).

Further, the electric moving body 10 includes a plurality of electric moving bodies 10, and the sharing system 12 further includes the plurality of station lock mechanisms 38 provided at the station 22 at which the plurality of electric moving bodies 10 are configured to be parked, the station lock mechanisms 38 being configured to respectively place the plurality of electric moving bodies 10, by locking, in a state in which the electric moving bodies 10 are incapable of being taken out, and to respectively place the electric moving bodies 10, by unlocking, in a state in which the electric moving bodies 10 are capable of being taken out, and the vehicle management unit 31 configured to control operations of the plurality of station lock mechanisms 38, wherein in the state in which the electric moving bodies 10 are incapable of being taken out, in the case that one of the users is authenticated by the authentication unit 150, the vehicle management unit 31 places the electric moving body 10 in which the user battery 102 is installed, in the state in which the electric moving body 10 is capable of being taken out, whereas, in the case that the one of the users is not authenticated by the authentication unit 150, the vehicle management unit 31 continues the state in which the electric moving bodies 10 are incapable of being taken out. In accordance with such features, the user can use the electric moving body 10 smoothly, because of the determination by the authentication unit 150. Also, the management side can prevent unauthorized usage by an illegitimate user.

Further, the electric moving body 10 further includes a vehicle lock mechanism 72 configured to switch between the locked state and the unlocked state, wherein in the locked state, in the case that one of the users is authenticated by the authentication unit 150, the vehicle lock mechanism 72 transitions to the unlocked state, whereas, in the case that the one of the users is not authenticated by the authentication unit 150, the vehicle lock mechanism 72 continues the locked state. In accordance with such features, the user can easily switch between the usage of the electric moving body 10 and the stop of usage thereof, by installation and detachment of the user battery 102.

Further, the sharing system 12 further includes the management server 28 configured to acquire the battery identification information at time of application for usage of the electric moving body 10 by one of the users, and to register, in the electric moving body 10, the battery identification information as the registration identification information prior to the one of the users using the electric moving body 10. In accordance with such features, the authentication unit 150 can certainly retain the registration identification information when the user rents the electric moving body 10. Thus, user authentication is executed in a stable manner.

Further, the sharing system 12 further includes the information processing terminal 26 owned by the one of the users, and configured to transmit the battery identification information to the management server 28 at the time of application for usage of the electric moving body 10 by the one of the users, wherein the information processing terminal 26 assigns the battery identification information to the user battery 102. In accordance with such features, the sharing system 12 can easily use the battery identification information even if the battery identification information of the user battery 102 is unknown.

Otherwise, the sharing system 12 further includes the information processing terminal 26 owned by the one of the users, and configured to transmit the battery identification information to the management server 28 at the time of application for usage of the electric moving body 10 by the one of the users, wherein the information processing terminal 26 automatically acquires the battery identification information of the user battery 102 based on connection of the information processing terminal 26 to the user battery 102. In accordance with such features, the user can easily acquire the battery identification of the user battery 102.

Further, the management server 28 stores adjustment information for adjusting the state of the electric moving body 10 in accordance with each of the users, and in the case that the one of the users is authenticated by the authentication unit 150, the electric moving body 10 adjusts the state of the electric moving body 10 based on the adjustment information acquired from the management server 28. In accordance with such features, each of the users does not have to adjust the electric moving body 10 by themselves every time the electric moving body 10 is used, and can use the electric moving body 10 more comfortably.

Further, the sharing system 12 further includes the usage measurement unit 162 configured to measure the usage period of the electric moving body 10, by setting the date and time when the user battery 102 is installed in the holder (second holder 112) to the starting point in time of usage, and setting the date and time when the user battery 102 is taken out from the holder to an ending point in time of usage. In accordance with such features, the sharing system 12 can easily calculate the usage period of the electric moving body 10, depending on the installation and detachment of the user battery 102.

Further, the sharing system 12 further includes the calculation unit 196 configured to calculate the usage fee for the electric moving body 10 on the basis of the usage period of the electric moving body 10. In accordance with such features, the sharing system 12 can charge the usage fee to the user appropriately, depending on the usage period of the electric moving body 10 by the user.

## Claims

1. A sharing system (12) in which a plurality of users share an electric moving body (10), the electric moving body including a holder (112) configured to detachably retain a user battery (102) possessed by one of the users who has rented the electric moving body, the sharing system comprising:
an authentication unit (150) configured to authenticate the one of the users that uses the electric moving body, by acquiring battery identification information from the user battery installed in the holder, and determining whether the acquired battery identification information coincides with registration identification information that is registered beforehand.

2. The sharing system according to claim 1, wherein the electric moving body comprises a plurality of electric moving bodies,
the sharing system further comprises:
a plurality of station lock mechanisms (38) provided at a station (22) at which the plurality of electric moving bodies are configured to be parked, the station lock mechanisms (38) being configured to respectively place the plurality of electric moving bodies, by locking, in a state in which the electric moving bodies are incapable of being taken out, and to respectively place the electric moving bodies, by unlocking, in a state in which the electric moving bodies are capable of being taken out; and
a vehicle management unit (31) configured to control operations of the plurality of station lock mechanisms,
wherein in the state in which the electric moving bodies are incapable of being taken out, in a case that one of the users is authenticated by the authentication unit, the vehicle management unit places the electric moving body in which the user battery is installed, in the state in which the electric moving body is capable of being taken out, whereas, in a case that the one of the users is not authenticated by the authentication unit, the vehicle management unit continues the state in which the electric moving bodies are incapable of being taken out.

3. The sharing system according to claim 1 or 2, wherein the electric moving body further includes a vehicle lock mechanism (72) configured to switch between a locked state and an unlocked state,
wherein in the locked state, in a case that one of the users is authenticated by the authentication unit, the vehicle lock mechanism transitions to the unlocked state, whereas, in a case that the one of the users is not authenticated by the authentication unit, the vehicle lock mechanism continues the locked state.

4. The sharing system according to any one of claims 1 to 3, further comprising:
a management server (28) configured to acquire the battery identification information at time of application for usage of the electric moving body by one of the users, and to register, in the electric moving body, the battery identification information as the registration identification information prior to the one of the users using the electric moving body.

5. The sharing system according to claim 4, further comprising:
an information processing terminal (26) owned by the one of the users, and configured to transmit the battery identification information to the management server at the time of application for usage of the electric moving body by the one of the users,
wherein the information processing terminal assigns the battery identification information to the user battery.

6. The sharing system according to claim 4, further comprising:
an information processing terminal (26) owned by the one of the users, and configured to transmit the battery identification information to the management server at the time of application for usage of the electric moving body by the one of the users,
wherein the information processing terminal automatically acquires the battery identification information of the user battery based on connection of the information processing terminal to the user battery.

7. The sharing system according to any one of claims 4 to 6, wherein the management server stores adjustment information for adjusting a state of the electric moving body in accordance with each of the users, and
in a case that the one of the users is authenticated by the authentication unit, the electric moving body adjusts the state of the electric moving body based on the adjustment information acquired from the management server.

8. The sharing system according to any one of claims 1 to 7, further comprising:
a usage measurement unit (162) configured to measure a usage period of the electric moving body, by setting a date and time when the user battery is installed in the holder to a starting point in time of usage, and setting a date and time when the user battery is taken out from the holder to an ending point in time of usage.

9. The sharing system according to claim 8, further comprising:
a calculation unit (196) configured to calculate a usage fee for the electric moving body on a basis of the usage period of the electric moving body.
